# EUROPEAN PATENT APPLICATION

(11) **EP 4 480 977 A1**
(43) Date of publication of application: **25.12.2024**
(21) Application number: 23306008.6
(22) Date of filing: 23.06.2023
(51) Int. Cl.: C08G 18/08, C09D 175/04, E04D 5/00

(54) **POLYURETHANE-BASED COATINGS AND COATED SUBSTRATES**

(71) Applicant: CertainTeed LLC, Malvern, PA 19355 (US)
(72) Inventor: CEDANO SERRANO, Francisco Javier, 93303 Aubervilliers (FR); PATIL, Anvay Arun, Malvern, 19355 (US); CAMPONESCHI BROTHERSON, Erin Lynn, Malvern, 19355 (US)
(74) Representative: Murgitroyd & Company

(57) **Abstract**

This disclosure relates to polyurethane-based coating materials and coatings and coated products made therewith. In one aspect of the disclosure, an aqueous coating composition includes water, and, dispersed in the water, a functionalized anionic polyurethane present in an amount in the range of 20-80 wt% of the composition on a dry solids basis; a water-insoluble transition metal crosslinking agent present in an amount in the range of 0.5-30 wt% of the composition on a dry solids basis; and a pseudoplastic thickener in an amount in the range of 0.02 wt% to 4 wt% on a dry solids basis; and at least one colorant (e.g., a near-infrared reflective pigment) present in an amount in the range of 0.2 wt% to 40 wt% on a dry solids basis.

## Description

### BACKGROUND OF THE DISCLOSURE

### 1. Field of Disclosure

The present disclosure relates generally to polyurethane-based coatings, for example, for use as coatings in various building applications such as roof coatings and granule coatings.

### 2. Technical Background

Coatings disposed on top of roofing shingles or roofing membranes provide numerous advantages to the roofing product, such as protection from the weather, water and/or algae resistance, and enhanced reflectivity. Coatings that have enhanced reflectivity can provide passive cooling to a roof, reducing both building cooling loads and the urban heat effect.

There exist polymeric roof coatings that can provide a high degree of reflectivity to a roof. The main indicator to evaluate the performance of PUD coatings is to measure the Solar Reflective Index (SRI). This measurement is a combination of the coating's emissive and reflective properties. The new proposed energy code in California (Title-21) and new energy code in Los Angeles, USA (County Title 31) prescribe new standards for cool roof performance. The requirements are that a low-slope roofing surface must achieve either an aged Solar Reflectance (aged-SR) higher than 70% or an aged Solar Reflective Index (aged-SRI) after 3 years higher than 85.

However, conventional reflective roof coatings are typically bright white in color. While these coatings can provide a high degree of reflectivity, the stark whiteness of the coatings can be aesthetically undesirable in many cases, especially for use on pitched residential roofs.

Further, PUDs can be costly, both in terms of the raw ingredients within the coatings and the time it takes to manufacture roofing products with the coating. Accordingly, the main challenges associated with PUDs are to develop cost viable options that are durable (e.g., good UV and thermal aging properties and a low degree of cracking when rolled or bent) and fast drying so as to be used directly in current production lines (e.g., around 20 seconds), while maintaining the desired SRI performance.

Accordingly, there is a need in the art to improve current PUD coatings to improve the performances of the overall roofing system.

### SUMMARY

In one aspect, the present disclosure provides an aqueous coating composition comprising:
a functionalized anionic polyurethane present in an amount in the range of 2-40 wt% of the composition;
a water-insoluble transition metal crosslinking agent present in an amount in the range of 2-40 wt% of the composition;
water;
a pseudoplastic thickener in an amount in the range of 0.01 wt% to 2 wt% of the composition; and
at least one colorant, e.g., a near-infrared reflective pigment, present in an amount in the range of 0.1 wt% to 20 wt% of the composition.

In another aspect of the disclosure, an aqueous coating composition includes water, and, dispersed in the water,
a functionalized anionic polyurethane present in an amount in the range of 20-80 wt% of the composition on a dry solids basis;
a water-insoluble transition metal crosslinking agent present in an amount in the range of 0.5-30 wt% of the composition on a dry solids basis; and
a pseudoplastic thickener in an amount in the range of 0.02 wt% to 4 wt% on a dry solids basis; and
at least one colorant (e.g., a near-infrared reflective pigment) present in an amount in the range of 0.2 wt% to 40 wt% on a dry solids basis.

In another aspect, the disclosure provides a coated surface comprising a substrate having a layer of a coating composition as disclosed herein disposed thereon.

In another aspect, the disclosure provides a coating that is a coated dried product of a coating composition as described herein.

In another aspect, the disclosure provides a roofing material comprising a roofing product (e.g., a roofing membrane or a roofing shingle), and a coating as described herein disposed on a top surface thereof.

In another aspect, the disclosure provides a roof comprising a roof deck and a roofing material as described herein disposed thereon.

In another aspect, the disclosure provides a method of making a roof as described herein, the method comprising providing a roof deck having disposed thereon the roofing product; and coating and drying on the roofing product a coating composition as described herein.

In another aspect, the disclosure provides a collection of roofing granules, each comprising a base particle and a coating as described herein coating the base particle.

Additional aspects of the disclosure will be evident from the disclosure herein.

### BRIEF DESCRIPTION OF FIGURES

The accompanying drawings are included to provide a further understanding of the methods and devices of the disclosure, and are incorporated in and constitute a part of this specification. The drawings are not necessarily to scale, and sizes of various elements may be distorted for clarity. The drawings illustrate one or more embodiment(s) of the disclosure, and together with the description serve to explain the principles and operation of the disclosure.
FIG.1 is a schematic cross-sectional view of a coated surface as described herein.
FIG. 2 is a schematic cross-sectional view of a coated roofing material as described herein.
FIG. 3 is a schematic perspective view of a roof as described herein.
FIG. 4 is a schematic perspective view of a building as described herein.
FIG. 5 is a schematic cross-sectional view of a roofing granule as described herein.
FIG. 6 is a graph showing Brookfield viscosity as a function of spindle rotation rate for an example aqueous coating composition.
FIG. 7 is a set of photographs of granule-coated roofing shingles coated with formulations of Table 2.
FIG. 8 is a set of light-reflectance spectra of various formulations of Table 2 cast into films.
FIG. 9 is a set of light-reflectance spectra of the coated shingles of FIG. 7.
FIG. 10 is a graph of reflectance vs. coverage rate for a coating of the disclosure.
FIG. 11 is a set of reflectance spectra and FIG. 12 provides photographs of a set of cast films of the disclosure.
FIG. 13 is a set of photographs of granules coated with formulation 2.
FIG. 14 is a set of photographs of granules coated with formulation 5.
FIG. 15 is a comparison of granule color before and after accelerated aging.
FIG. 16 is a graph of viscosity for various dilutions of formulation 9.
FIGS. 17-19 are photographs of granules coated with formulations 10, 11 and 12, respectively.

### DETAILED DESCRIPTION

Current cool roof solutions based on coatings made from polyurethane dispersions (PUDs) are typically provided with bright white color. While this can provide high solar reflectivity and thus a relatively cooler roof, the white color is often undesirable, especially on residential pitched roofs. Here, the present inventors have developed PUD coatings for roofing systems that include a polyurethane dispersion and a near-infrared reflective colored pigment. The present inventors have found that these PUD-based coatings can have a relatively high SRI (even when deeply colored) and are flexible and fast drying.

Accordingly, in one aspect of the disclosure, an aqueous coating composition includes:
a functionalized anionic polyurethane present in an amount in the range of 2-40 wt% of the composition;
a water-insoluble transition metal crosslinking agent present in an amount in the range of 0.5-15 wt% of the composition;
water; and
a pseudoplastic thickener in an amount in the range of 0.01 wt% to 2 wt% of the composition; and
at least one colorant present in an amount in the range of 0.1 wt% to 20 wt% of the composition.

In another aspect of the disclosure, an aqueous coating composition includes water, and, dispersed in the water,
a functionalized anionic polyurethane present in an amount in the range of 20-80 wt% of the composition on a dry solids basis;
a water-insoluble transition metal crosslinking agent present in an amount in the range of 0.5-30 wt% of the composition on a dry solids basis; and
a pseudoplastic thickener in an amount in the range of 0.02 wt% to 4 wt% on a dry solids basis; and
at least one colorant present in an amount in the range of 0.2 wt% to 40 wt% on a dry solids basis.

The coating materials of the disclosure can be made to be deeply colored, and such can provide desirable colors for use in a variety of settings, including residential pitched roofs. Further, the coating compositions can be made to have pseudoplastic behavior, and thus be especially desirable for application by spray coating or other high-shear coating processes.

The aqueous coating compositions of the disclosure include a functionalized anionic polyurethane. Functionalized anionic polyurethanes suitable for use in the systems of the present disclosure are described in International Patent Application Publication no. 2021/074134, which is hereby incorporated herein by reference for all purposes. The functionalized anionic polyurethane can desirably be present in the form of a dispersion in water.

In various embodiments as otherwise described herein, anions of the functionalized anionic polyurethane are carboxylate anions. For example, in various embodiments of the present disclosure as otherwise described herein, the functionalized anionic polyurethane includes both free pending carboxylate groups of formula -COO⁻ M⁺ where M⁺ is a cation resulting from neutralization of carboxylic acid groups with a base, and pending carboxylate ester groups resulting from esterification of free carboxylic acid groups with an epoxysilane (e.g., a water-soluble alkoxysilane). In various embodiments of the disclosure as described herein, the base is an amine-type base. For example, the base may be ethylenediamine.

The present inventors note that anionic polyurethanes that are functionalized by reaction of a fraction of pendant carboxylate groups with an epoxysilane are especially suitable for use in the aqueous coating compositions as otherwise described herein. The epoxy group of the epoxysilane can esterify with carboxylates of the anionic polyurethanes, thereby decreasing the overall anionic charge density of the polyurethane and covalently bonding the alkoxysilyl groups to the polymer. The decrease of anionic charges on the polyurethane can be followed by monitoring the decrease of the negative zeta potential over the reaction time.

The present inventors note that it can be desirable in some embodiments to esterify no more than half of the anionic groups (e.g., carboxylate groups) of the anionic polyurethane. The remaining anionic groups can provide stability to the polyurethane, especially when in the form of a dispersion. But if the anionic polyurethane has too high an anionic charge density, the resulting hydrophilic nature can provide an undesirably high water uptake and thus decrease the durability and mechanical performance of the resulting dried coating. The inventors note that remaining anionic charges can be crosslinked with water-insoluble transition metal crosslinking agents, as described in more detail below, to increase the durability of the final coating without destabilizing the polyurethane dispersion before application to the substrate.

The functionalized anionic polyurethane is the reaction product of a polyisocyanate component and a polyol component. For example, in various embodiments as otherwise described herein, the polyisocyanate component includes one or more aliphatic polyisocyanates. For example, the aliphatic polyisocyanates may be independently selected from 1,6-hexamethylene-diisocyanate, isophorone-diisocyanate, 2,4-hexahydrotoluene-diisocyanate, 2,6-hexahydrotoluene-diisocyanate, dicyclohexylmethane-diisocyanate, norbornane-diisocyanate, cyclohexane-1,4-diisocyanate, 1,12-dodecane-diisocyanate, and 2,2,4-trimethylhexamethylene-diisocyanate. In various embodiments of the present disclosure as described herein, the polyisocyanate component includes one or more aromatic polyisocyanates, for example, one or more of xylylene-diisocyanate, 2,4-toluene-diisocyanate, 2,6-toluene-diisocyanate, tetramethylxylene-diisocyanate, and methylene-diphenyl-diisocyanate.

In various embodiments of the present disclosure as otherwise described herein, the polyol component includes one or more of polyether-polyols, polyester-polyols, and polycarbonate-polyols.

The person of ordinary skill in the art will appreciate that the anionic character can be provided as part of the polyol component, as part of the polyisocyanate component, or as part of both. The anionic character can desirably be provided by a carboxylate-functional monomer. But in some embodiments, the anionic character can be provided by a monomer that can later be converted to an anionic group, e.g., as an ester-protected carboxylate. In various embodiments as otherwise described herein, the polyol component includes a polyhydroxylated carboxylic acid (i.e., a molecule that bears at least one carboxylate and at least two hydroxyl groups), e.g., a dimethylol propionic acid.

The person of ordinary skill in the art will appreciate that additional monomers can be present. For example, urea linkages can be included in the polyurethane through the use of polyamines such as ethylenediamine.

In some embodiments of the present disclosure as described herein, the functionalized anionic polyurethane is a reaction product of polyether-polyol, aromatic diisocyanate, dimethylol propionic acid, and ethylenediamine.

The person of ordinary skill in the art will appreciate that the anionic polyurethane can be made using techniques familiar to the skilled artisan, e.g., as described in U.S. Patent no. 7,345,110, which is hereby incorporated herein by reference in its entirety for all purposes. In various embodiments of the present disclosure as described herein, the anionic polyurethane is prepared by first preparing an isocyanate-terminated carboxylic acid-pendant prepolymer by reacting a polyol component that includes one or more dihydroxylated carboxylic acids with a stoichiometric excess of a polyisocyanate component. The NCO/OH ratio is in excess of 1, e.g., in the range of 1.2 to 5. The resulting prepolymer can be neutralized with a base to provide an isocyanate-terminated carboxylate-pendant prepolymer. This can be performed, e.g., under shear in water. The base can be, for example, an amine base. The resulting prepolymer can be reacted with a polyamine such as ethylenediamine (e.g., as a chain extender) to form urea linkages and provide a polyurethane having pendant carboxylate groups. A polyamine such as diethylamine can be used to provide both carboxylate neutralization and reaction with terminal isocyanates.

The present inventors note that the anionic polyurethane, before reaction with epoxysilane, desirably has a relatively low acid value (i.e., the amount of mass of KOH in mg required to neutralize one gram of anionic polyurethane), e.g., in the range of 5-25, or 10-25, or 12-25, or 5-18, or 10-18, or 12-18, or 5-17, or 10-17, or 12-17. Anionic polyurethanes having high acid values can require excessive amounts of epoxysilane and/or crosslinking particles. A high amount of epoxysilane can undesirably result in gelation or coagulation of the dispersion, making difficult the preparation of a stable, self-crosslinking material. And high amounts of crosslinking particles can require a higher amount of surfactant for dispersion, which can in turn make the dried coating more hydrophilic and less water-resistant. Provision of an anionic polyurethane with a desirable initial anionic charge along with use of a combination of crosslinking agents (epoxysilane and transition metal-containing particles) in moderate amounts has allowed for the provision of water-based, non-toxic, self-crosslinking polyurethane dispersion having a long shelf life and which, after drying and crosslinking, can provide polyurethane coatings having water resistance and mechanical performance comparable to polyurethane coatings made from solvent-based systems.

In various desirable embodiments, alkoxysilane functionality is added by reaction with an epoxysilane. This can be, for example, through partial esterification of carboxylates with epoxysilane, with the remaining non-esterified carboxylates present for stabilizing a dispersion of the polyurethane and for crosslinking with transition metal compounds upon drying of the coating. The epoxysilane is desirably water-soluble. In various embodiments of the disclosure as described herein, the water-soluble epoxysilane is selected from the group consisting of 3-glycidyloxypropyl-trialkoxysilanes, 3-glycidyloxypropyl-dialkoxyalkylsilanes, epoxycyclohexylethyltrialkoxy-silanes, epoxycyclohexyl-ethyldialkoxyalkylsilanes, and water-soluble epoxy-functional alkoxysilane oligomers. Suitable water-soluble epoxysilane oligomers include those having a short siloxane chain with pendant epoxy groups. The preparation of such oligomers is described for example in European Patent Application Publication no. 1896522, which is hereby incorporated herein by reference in its entirety, and they are available under the reference CoatOSil MP 200 from Momentive.

The alkoxy groups of the alkoxysilane are desirably ethoxy and/or methoxy.

The person of ordinary skill in the art will select reaction conditions based on the present disclosure and the particular materials used. For example, in certain embodiments as otherwise described herein, the epoxysilane is added to the anionic polyurethane in an amount in the range of 0.3-5.0% by weight, for example, 0.4-4.0% or 0.5-3.0% by weight with respect to the dry weight of the anionic polyurethane. When the amount of epoxysilane is too high, the reaction mixture gels during the reaction time and is no longer suitable as a coating composition. And for amounts that are too low, the remaining anionic charge density on the anionic polyurethane is too high and requires the addition of excessive amounts of crosslinking particles. The amounts of crosslinking particles however cannot be increased at will because there is a risk of sedimentation or a need of excessively high amounts of dispersing agent such as surfactant. The epoxysilane can be added slowly, e.g., dropwise, to the anionic polyurethane at room temperature with agitation. The resulting mixture can be left to react for at least several hours. It is not necessary to keep the reaction mixture under agitation, nor is it necessary to heat the reaction mixture. The reaction time at room temperature (20 °C) is generally 10-100 hours, e.g., 10-100 hours, or 40-75 hours.

As noted above, in one aspect the aqueous coating composition of the present disclosure includes a functionalized anionic polyurethane present in an amount in the range of 2-40 wt% of the composition. For example, in various embodiments as otherwise described herein, the functionalized anionic polyurethane is present in the aqueous coating composition an amount in the range of 2-35 wt%, or 2-30 wt%, or 2-25 wt%, or 2-20 wt%, or 2-15 wt%, or 2-10 wt%, or 5-40 wt%, or 5-35 wt%, or 5-30 wt%, or 5-25 wt%, or 5-20 wt%, or 5-15 wt%, or 10-40 wt%, or 10-35 wt%, or 10-30 wt%, or 10-25 wt%, or 10-20 wt%, or 15-40 wt%, or 15-35 wt%, or 15-30 wt%, or 15-25 wt%, or 20-40 wt%, or 20-35 wt%, or 20-30 wt%, or 25-40 wt%, or 25-35 wt%, or 30-40 wt%.

As noted above, in another aspect, the aqueous coating composition includes 20-80 wt% functionalized anionic polyurethane on a dry solids basis. For example, in various embodiments as otherwise described herein, the aqueous coating composition includes 20-70 wt%, or 20-60 wt%, or 20-50 wt%, or 20-40 wt%, or 20-30 wt%, or 30-80 wt%, or 30-70 wt%, or 30-60 wt%, or 30-50 wt%, or 30-40 wt%, or 40-80 wt%, or 40-70 wt%, or 40-60 wt%, or 40-50 wt%, or 50-80 wt%, or 50-70 wt%, or 50-60 wt% functionalized anionic polyurethane on a dry solids basis.

The weights of particular materials described herein are described on a dry mass basis, i.e., exclusive of water, other solvents, or other components that are provided therewith in the ingredient used to provide the particular material to the formulation. For example, if 50 g of a 50 wt% aqueous dispersion of a functionalized anionic polyurethane is provided to a composition, this is understood to provide 25 g of the functionalized anionic polyurethane to the composition.

The person of ordinary skill in the art will select relative amounts of functionalized anionic polyurethane, transition metal crosslinking agent, and hydrophobic acrylic polymer and/or colorant (such as near-infrared reflective colored pigment, or other pigment or dye), to provide desired coating liquid and material properties, based on the present disclosure. The relative amount of water can be tuned, for example, to provide a desired viscosity and solids concentration to provide a dried coating of a desired thickness.

As described above, the polyurethane dispersion of the present invention includes a water-insoluble transition metal crosslinking agent. The transition metal crosslinking agent can be provided as particles in the final dried coating, and act, e.g., to crosslink carboxylates of the functionalized anionic polyurethane. The crosslinking particles can be incorporated into the coating composition, e.g., after part of the anionic groups have been esterified with the epoxysilane. The transition metal compounds forming the crosslinking particles used in the present invention must be insoluble in the aqueous phase of composition, water-insoluble transition metal compounds being defined for purposes of present application as compounds having a solubility in distilled water at 20 °C of less than 0.001 %. Desirably, the aqueous composition does not contain significant amounts of free multivalent transition metal cations which would immediately result in early crosslinking of anionic polymer, and then cause the dispersion to gel, precipitate or sediment. Thus, the coating compositions as described herein are desirably essentially devoid of free multivalent transition metal ions, i.e. they comprise less than 0.1 wt%, preferably less than 0.01 wt% of water-soluble transition metal salts such as for example zirconium potassium carbonates or zirconium ammonium carbonates described for example in US 4,061,720.

In various embodiments of the present disclosure as described herein, the water-insoluble transition metal crosslinking agent is a transition metal oxide, transition metal hydroxide, or transition metal salt. In various particular embodiments, the water-insoluble transition metal crosslinking agent is a transition metal oxide, e.g., zinc oxide, aluminum oxide, tin oxide, and/or tungsten oxide. In various particular embodiments of the present disclosure as described herein, the transition metal oxide is zinc oxide.

The transition metal crosslinking agent is desirably provided with a small particle size, to provide for dispersibility in aqueous systems and to provide a relatively homogenous coating. For example, in various embodiments as otherwise described herein, the crosslinking agent has a median particle diameter in the range of 1-20 microns, e.g., 1.5-15 microns, as measured by laser diffraction. Crosslinking of carboxylated polymers by transition metal compound particles is known and described for example in US 8,236,903 and US 2008/0255273. These prior art documents describe in particular nano particles, i.e. particles having submicron dimensions, which when thoroughly incorporated into the polymer matrix provide a large surface of contact for efficient crosslinking. The inventors were surprised when they found that non nano-scale particles could also be used to efficiently contribute to the crosslinking of carboxylated polyurethane dispersions. Particles having an average size of at least 1 micron are far less expensive and less problematic from an environmental point of view than the nanoparticles described in the literature. Moreover, such particles can themselves provide advantages with respect to solar reflectivity, especially in the case of zinc oxide. An amount of a solar-reflective crosslinking agent in an amount up to a described limit for the cross-linking agent is quantified as cross-linking agent. An amount in excess of the described limit is quantified as solar-reflective particles as described below.

As noted above, in one aspect of the disclosure the water-insoluble transition metal crosslinking agent is present in an amount in the range of 0.2-15 wt% of the aqueous coating composition. For example, in some embodiments of the present disclosure as described herein, the water-insoluble transition metal crosslinking agent is present in an amount in the range of 0.2-10 wt%, or 0.2-5 wt%, or 0.2-3 wt%, or 0.5-15 wt%, or 0.5-10 wt%, or 0.5-5 wt%, or 0.5-3 wt%, or 1-15 wt%, or 1-10 wt%, or 1-5 wt%, or 2-15 wt%, or 2-10 wt%, or 2-5 wt%, based on the total weight of the aqueous coating composition. The person of ordinary skill in the art will select relative amounts of functionalized anionic polyurethane, transition metal crosslinking agent, and hydrophobic acrylic polymer and/or colorant (such as near-infrared reflective colored pigment, or other pigment or dye), to provide desired coating liquid and material properties, based on the present disclosure.

As noted above, in another aspect of the disclosure the water-insoluble transition metal crosslinking agent is present in an amount in the range of 0.5-30 wt% of the aqueous coating composition on a dry solids basis. For example, in some embodiments of the present disclosure as described herein, the water-insoluble transition metal crosslinking agent is present in an amount in the range of 0.5-20 wt%, or 0.5-10 wt%, or 0.5-6 wt%, or 1-30 wt%, or 1-20 wt%, or 1-10 wt%, or 1-6 wt%, or 2-30 wt%, or 2-20 wt%, or 2-10 wt%, or 5-30 wt%, or 5-20 wt%, or 5-10 wt%, on a dry solids basis.

The person of ordinary skill in the art can select a weight ratio of functionalized anionic polyurethane to water-insoluble transition metal crosslinking agent that provides desirable crosslinking in the final dried coating. For example, in various embodiments as otherwise described herein, a weight ratio of water-insoluble transition metal crosslinking agent to functionalized anionic polyurethane is 0.01-0.4, e.g., in the range of 0.02-0.4, or 0.03-0.4, or 0.01-0.25, or 0.02-0.25, or 0.03-0.25, or 0.01-0.15, or 0.02-0.15, or 0.03-0.15.

The functionalized anionic polyurethane and the water-insoluble transition metal crosslinking agent can be prepared and provided as a polyurethane dispersion, for example, present in an amount in the range of 40 wt% to 80 wt% of the composition and comprising the functionalized anionic polyurethane, the water-insoluble transition metal crosslinking agent, and water. The hydrophobic acrylic polymer and/or the near-infrared reflective colored pigment can be added thereto. A suitable polyurethane dispersion containing functionalized anionic polyurethane and the water-insoluble transition metal crosslinking agent is available from Maris Polymers as MARl SEAL 400W.

The aqueous coating composition of the present disclosure also includes water. The relative amount of water can be tuned, for example, to provide a desired viscosity and solids concentration to provide a dried coating of a desired thickness. In various embodiments as otherwise described herein, water is present in an amount in the range of 25-95 wt% of the aqueous coating composition. In various embodiments, water is present in an amount in the range of 25-75 wt%, e.g., 25-60 wt% or 25-50 wt% of the aqueous coating composition. In various embodiments water is present in an amount in the range of 30-95 wt% of the aqueous coating composition, e.g., 30-75 wt%, or 30-60 wt%, or 30-50 wt%. In various embodiments water is present in an amount in the range of 35-95 wt% of the aqueous coating composition, e.g., 35-75 wt%, or 35-60 wt%, or 35-50 wt%. In various embodiments water is present in an amount in the range of 40-95 wt% of the aqueous coating composition, e.g., 40-75 wt%, or 40-65 wt%, or 40-55 wt%. Of course, different amounts can be used in other embodiments, if a thicker or thinner coating is desired.

As noted above, the aqueous coating composition of this aspect of the disclosure also includes a pseudoplastic thickener in an amount in the range of 0.01-2 wt% of the aqueous coating composition. A pseudoplastic thickener is a thickener that provides a desired degree of pseudoplastic behavior to the composition, e.g., any of the ranges of viscosities at low and high shear as described herein. As used herein, the amount of the thickener is calculated exclusive of any carrier or solvent that it may be provided with.

In various embodiments, the pseudoplastic thickener is present in an amount in the range of 0.01-1 wt%, or 0.01-0.5 wt%, or 0.01-0.25 wt% based on the total weight of the composition. In various embodiments, the pseudoplastic thickener is present in an amount in the range of 0.02-2 wt%, e.g., 0.02-1 wt%, or 0.02-0.5 wt%, or 0.02-0.25 wt%, based on the total weight of the composition. In various embodiments, the pseudoplastic thickener is present in an amount in the range of 0.05-2 wt%, e.g., 0.05-1 wt%, or 0.05-0.5 wt%, or 0.05-0.25 wt%, based on the total weight of the composition. In various embodiments, especially in embodiments where further dilution may be desired, the pseudoplastic thickener is present in amount of 0.1-1 wt%, e.g., 0.1-0.7 wt%, or 0.1-0.5 wt%, based on the total weight of the composition.

Amounts can also be characterized on a dry weight basis. For example, in various embodiments, the pseudoplastic thickener is present in an amount in the range of 0.02-2 wt%, or 0.02-1 wt%, or 0.02-0.5 wt% on a dry solids basis. In various embodiments, the pseudoplastic thickener is present in an amount in the range of 0.04-4 wt%, e.g., 0.04-2 wt%, or 0.04-1 wt%, or 0.04-0.5 wt%, on a dry solids basis. In various embodiments, the pseudoplastic thickener is present in an amount in the range of 0.1-4 wt%, e.g., 0.1-2 wt%, or 0.1-1 wt%, or 0.1-0.5 wt%, on a dry solids basis. In various embodiments, especially in embodiments where further dilution may be desired, the pseudoplastic thickener is present in amount of 0.2-2 wt%, e.g., 0.2-0.1.5 wt%, or 0.2-1 wt%, based on the total weight of the composition.

A variety of pseudoplastic thickeners can be used in the presently described formulations. For example, in various desirable embodiments, the pseudoplastic thickener includes (or is) an associative thickener. There are a variety of types of suitable associative thickeners. For example, in various embodiments, the pseudoplastic thickener includes (or is) a hydrophobically modified ethoxylated urethane polymer. In various embodiments, the pseudoplastic thickener includes (or is) a hydrophobic alkali-swellable polymer (e.g., provided as an emulsion). In various embodiments, the pseudoplastic thickener includes (or is) a hydrophobically modified hydroxyethylcellulose

The person of ordinary skill in the art can, based on the disclosure herein, provide a desired amount and type of pseudoplastic thickener to provide the aqueous coating composition with a desired degree of pseudoplastic behavior. One example of a suitable pseudoplastic thickener is TAFIGEL^{®} PUR 61, which is a hydrophobically modified ethoxylated urethane resin-based associative thickener. Other suitable pseudoplastic thickening agents include TAFIGEL^{®} PUR 85, TAFIGEL^{®} PUR 43, and TAFIGEL^{®} AP15.

As described above, the aqueous coating composition of this aspect of the disclosure also includes at least one colorant. Desirably, the colorant can be used to provide the composition, once coated and dried, with a deep color.

The present inventors have determined that the coating materials described herein can provide good dispersion of colorants such as pigments therein. This is especially true when compared to the ceramic-based coatings that are typically used to coat roofing granules. This can allow for relatively higher loading rates and thus relatively less overall coating to target a desired color, especially as compared to conventional ceramic granule coatings.

In various desirable embodiments, the at least one colorant can include at least one near-infrared reflective colored pigment. The present inventors have noted that the use of such pigments can desirably provide deep color while allowing the coated material to have a relatively high reflective of solar energy. The near-infrared reflective colored pigment is not particularly limited and can be selected from any near-infrared reflective colored pigment known to those skilled in the art.

The near-infrared reflective colored pigment is also reflective of near-infrared radiation, as measured by a reflectivity in the 700-1500 nm wavelength range of at least 30% (on an energy basis), e.g., at least 50% or even at least 70%. This can be measured using an appropriate spectrophotometer, e.g., a LAMBDA 900/950 spectrophotometer from PerkinElmer, using a sample of the pigment itself.

The near-infrared reflective colored pigment desirably has a total solar reflectivity of at least 30%, e.g., at least 50%. Solar reflectivity can be measured using a solar spectrum reflectometer, as is familiar to the person of ordinary skill in the art, on a sample of the pigment itself.

There are a variety of near-infrared reflective colored pigments, based on a variety of chemistries, available in the art. Many of these are mixed metal oxides. For example, in various embodiments as otherwise described herein, the near-infrared reflective colored pigment is a so-called complex inorganic color pigment, e.g., an oxide of tin, titanium and zinc, or of iron and chromium, or of titanium, chromium and antimony.

**Table 1 below provides a number of suitable pigments**

| **Color** | **Chemistry** | **Product** |
|---|---|---|
| Blue | | 34L84 - Atlantic Blue (Rockwood COLOURPLEX) |
| Yellow | Pigment Yellow 216 - (Sn,Zn,Ti)O2 | 34H1001R - Yellow (Rockwood COLOURPLEX) |
| Orange | Pigment Yellow 216 - (Sn,Zn,Ti)O2 | 34H1004 - Orange (Rockwood COLOURPLEX) |
| Black | | 34E84 - Black (Rockwood COLOURPLEX) |
| Green | | 34k6 - Green (Rockwood COLOURPLEX) |
| Yellow | Pigment Brown 24 / (Ti,Cr,Sb) O2 | PS 10408 H Pigment Yellow |
| Orange | Pigment Yellow 216/ rutile tin zinc (mixture of titanium, tin and zinc) | Orange 30C342 (Shepherd DYNAMIX) |
| Red | Pigment Red 101/iron[III] oxide | Nubifer R-5530 (Ferro) |
| Red | Luconyl / Xfast^{®} Red 3390 | |
| Black | Pigment Brown 29, (Cr,Fe)2O3 | Black 10P950 (Shepherd) |
| Black | Pigment Brown 29, (Cr,Fe)2O3 | Black 10PG996 (DCL corp) |
| Black | Pigment Brown 29, (Cr,Fe)2O3 | 34E34 Black (Venator) |
| Black | Pigment Brown 29, (Cr,Fe)2O3 | PS 24-3950 EU IR Black (Ferro) |
| Black | Pigment Green 17 | V-775 IR Black (Venator, COOL COLORS) |
| Black | Pigment Brown 29, (Cr,Fe)2O3 | PS 24-10466 EU IR Black (Ferro) |
| Black | Pigment Brown 29, (Cr,Fe)2O3 | LUCONYL NG Black (BASF) or XFAST Black 0095 (Sun) |
| Aluminum | Al pigments leafing | STAPA Hydroxal E4000 (leafing) (Eckart) |
| Aluminum | Al pigments / Silverdollar / non-leafing / D-50 [54um] | STAPA Hydroxal E212 (non-leafing) (Eckart) |
| Aluminum | Al pigments / Corn flake / leafing / D-50 [20um] | STAPA Hydroxal E8 (leafing) (Eckart) |
| Aluminum | Silica encapsulated Al pigments / non-leafing / 61% Al / D-50 [36um] | STAPA SFP Hydrolan 214 (non-leafing) (Eckart) |
| Black | Pigment Brown 29, (Cr,Fe)2O3 - More reddish | V-760Q - reddish black, PBr29 (Ferro) |
| Black | Pigment Green 17 bluish black/high tinting strength, | V-772Q - bluish black/high tinting strength, PG17 (Ferro) |
| Black | Pigment Green 17 - very bluish black | V-775Q - very bluish black, PG17 (Ferro) |
| Dark brown | Pigment Yellow 164 | 10550Q - PY164 (Ferro) |
| Green | Pigment Green 17 | |
| Green | | V-11640Q (Ferro) |
| Ultramarine blue | | FP-40 (Ferro) |

Suitable near-infrared reflective colored pigments also include those available under the SOLARPLEX, COOL COLORS and REFLECT tradenames from Venator.

So-called infrared-reflective "functional" pigments can also be used. Infrared-reflective functional pigments include light-interference platelet pigments including titanium dioxide, light-interference platelet pigments based on metal oxide coated-substrate, mirrorized silica pigments based upon metal-doped silica, and alumina.

Additional examples of near IR-reflective pigments available from the Shepherd Color Company, Cincinnati, Ohio, include Arctic Black 10C909 (chromium green-black), Black 411 (chromium iron oxide), Brown 12 (zinc iron chromite), Brown 8 (iron titanium brown spinel), and Yellow 193 (chrome antimony titanium).

Light-interference platelet pigments are known to give rise to various optical effects when incorporated in coatings, including opalescence or "pearlescence." Examples of light-interference platelet pigments that can be employed in the process of the present invention include pigments available from Wenzhou Pearlescent Pigments Co., Ltd., No. 9 Small East District, Wenzhou Economical and Technical Development Zone, Peoples Republic of China, such as Taizhu TZ5013 (mica, rutile titanium dioxide and iron oxide, golden color), TZ5012 (mica, rutile titanium dioxide and iron oxide, golden color), TZ4013 (mica and iron oxide, wine red color), TZ4012 (mica and iron oxide, red brown color), TZ4011 (mica and iron oxide, bronze color), TZ2015 (mica and rutile titanium dioxide, interference green color), TZ2014 (mica and rutile titanium dioxide, interference blue color), TZ2013 (mica and rutile titanium dioxide, interference violet color), TZ2012 (mica and rutile titanium dioxide, interference red color), TZ2011 (mica and rutile titanium dioxide, interference golden color), TZ1222 (mica and rutile titanium dioxide, silver white color), TZ1004 (mica and anatase titanium dioxide, silver white color), TZ4001/600 (mica and iron oxide, bronze appearance), TZ5003/600 (mica, titanium oxide and iron oxide, gold appearance), TZ1001/80 (mica and titanium dioxide, off-white appearance), TZ2001/600 (mica, titanium dioxide, tin oxide, off-white/gold appearance), TZ2004/600 (mica, titanium dioxide, tin oxide, off-white/blue appearance), TZ2005/600 (mica, titanium dioxide, tin oxide, off-white/green appearance), and TZ4002/600 (mica and iron oxide, bronze appearance).

Examples of light-interference platelet pigments also include pigments available from Merck KGaA, Darmstadt, Germany, such as Iriodin^{®} pearlescent pigment based on mica covered with a thin layer of titanium dioxide and/or iron oxide; Xirallic^{™} high chroma crystal effect pigment based upon Al₂O₃ platelets coated with metal oxides, including Xirallic T 60-10 WNT crystal silver, Xirallic T 60-20 WNT sunbeam gold, and Xirallic F 60-50 WNT fireside copper; Color Stream^{™} multi color effect pigments based on SiO₂ platelets coated with metal oxides, including Color Stream F 20-00 WNT autumn mystery and Color Stream F 20-07 WNT viola fantasy; and ultra interference pigments based on TiO₂ and mica.

Examples of mirrorized silica pigments include pigments such as Chrom Brite^{™} CB4500, available from Bead Brite, 400 Oser Ave, Suite 600, Hauppauge, N.Y. 11788.

Of course, the person of ordinary skill in the art can select other near-infrared reflective colored pigments based on the present disclosure.

Of course, other colorants can be used. A variety of pigments are available for use. A variety of colored inorganic pigments are familiar to the person of ordinary skill in the art, as are organic pigments and dyes. The person of ordinary skill in the art will select .

As used herein, a colorant is colored, in that when measured on the CIELAB color space the pigment has an L* value of no more than 50, e.g., no more than 45, or no more than 40, or no more than 30, or no more than 28. In various embodiments, one or more of the one or more colorants has a L* value in the range of 10-50, or 10-45, or 10-40, or 10-30, or 10-28. In various embodiments, one or more of the one or more colorants has a L* value in the range of 15-50, or 15-45, or 15-40, or 15-30, or 15-28. In various embodiments, one or more of the one or more colorants has a L* value in the range of 20-50, or 20-45, or 20-40, or 15-30, or 20-28.

In this regard, the "color" of a colorant may be black or grey, i.e., having a relatively low a* and/or b* values in the CIELAB color space, for example, a value of (a²+b²)^{1/2} of less than 30, or less than 20, or less than 10, e.g., 5-30, or 5-20, or 5-10, or 10-30, or 10-20. However, in various embodiments, one or more of the one or more colorants has a value of the (a²+b²)^{1/2} of at least 30, e.g., at least 45, or at least 60, e.g., 30-95, or 45-95, or 60-95, or 30-80, or 45-80, or 60-80. A variety of colors can be used, depending on the desired color of the ultimate coating material. Notably, while only one colorant can be used, it can be desirable to use a combination of colorant in order to tune a desired color.

The total amount of the one or more colorants can be varied by the person of ordinary skill in the art to provide a desired color. For example, in various embodiments, the at least one colorant is present in an amount in the range of 0.1-15 wt%, e.g., 0.1-10 wt%, or 0.1-5 wt%, based on the total weight of the composition. In various embodiments, the at least one colorant is present in an amount in the range of 0.2-20 wt%, e.g., 0.2-15 wt%, or 0.2-10 wt%, or 0.2-5 wt%, based on the total weight of the composition. In various embodiments, the at least one colorant is present in an amount in the range of 0.5-20 wt%, e.g., 0.5-15 wt%, or 0.5-10 wt%, or 0.5-5 wt%, based on the total weight of the composition. In various embodiments, the at least colorant is present in an amount in the range of 1-20 wt%, e.g., 1-15 wt%, or 1-10 wt%, or 1-5 wt%, based on the total weight of the composition. In various embodiments, the at least one colorant is present in an amount in the range of 2-20 wt%, e.g., 2-15 wt%, or 2-10 wt%, based on the total weight of the composition. In various embodiments, the at least one colorant is present in an amount in the range of 3-20 wt%, e.g., 3-15 wt%, or 3-10 wt%, based on the total weight of the composition.

Here, too, amounts can be quantified with reference to the amount of dry solids of a composition. For example, in various embodiments, the at least one colorant is present in an amount in the range of 0.2-30 wt%, e.g., 0.2-20 wt%, or 0.2-10 wt% on a dry solids basis. In various embodiments, the at least one colorant is present in an amount in the range of 0.4-40 wt%, e.g., 0.4-30 wt%, or 0.4-20 wt%, or 0.4-10 wt%, on a dry solids basis. In various embodiments, the at least one colorant is present in an amount in the range of 1-40 wt%, e.g., 1-30 wt%, or 1-20 wt%, or 1-10 wt%, on a dry solids basis. In various embodiments, the at least one colorant is present in an amount in the range of 2-40 wt%, e.g., 2-30 wt%, or 2-20 wt%, or 2-10 wt%, on a dry solids basis. In various embodiments, the at least one colorant is present in an amount in the range of 4-40 wt%, e.g., 4-30 wt%, or 4-20 wt%, or 4-10 wt%, on a dry solids basis. In various embodiments, the at least one colorant is present in an amount in the range of 6-40 wt%, e.g., 6-30 wt%, or 6-20 wt%, or 6-10 wt%, on a dry solids basis.

The person of ordinary skill in the art will, based on the description herein, provide one or more colorants to provide the ultimate coating with a desired color, e.g., as described below.

As the person of ordinary skill in the art will appreciate, a variety of other components can be present in the aqueous coating compositions of this aspect of the disclosure.

For example, in various embodiments of the disclosure the coating composition also includes a hydrophobic acrylic polymer. The present inventors have noted that use of a hydrophobic acrylic polymer, e.g., as a dispersion or emulsion, in the coating composition can provide a number of benefits.

A variety of hydrophobic acrylic polymers can be used. For example, many such polymers are identified as primers, i.e., materials that are provided on a surface as a precoat, in order to provide a surface to which another material can better adhere. Notably, the present inventors have found that instead of using these materials as primers for a polyurethane dispersion, mixing them with the polyurethane dispersion to provide certain of the formulations of the disclosure can provide even better results. The hydrophobic acrylic polymer is not particularly limited and can be selected based on the desired properties of the coating as described herein. In various embodiments as otherwise described herein, the hydrophobic acrylic polymer, when provided as a dry film at standard laboratory conditions, has a water contact angle of at least 65 degrees, e.g., at least 70 degrees, or at least 75 degrees, for example, in the range of 65-95 degrees, or 70-95 degrees, or 75-95 degrees. In various embodiments, the hydrophobic acrylic polymer has a glass transition temperature (measured via differential scanning calorimetry) of no more than 35 °C, e.g., no more than 30 °C, for example, in the range of 5-35 °C, or 5-30 °C, or 10-35 °C, or 10-30 °C. In various embodiments as otherwise described herein, the hydrophobic acrylic polymer is provided as a self-crosslinking dispersion that alone can form a film that is flexible at room temperature, for example, with a minimum film forming temperature in the range of 0-20 °C. Examples of hydrophobic acrylic polymers include those available in the products Mowlith LDM 7717, Mowlith LDM 1865 WP, Mowlith LDM 7728 (all Celanese), EPS 719 (Engineered Polymer Solutions), and Exodisp C 4362 (EOC), all provided as aqueous dispersions.

In various embodiments as otherwise described herein, a hydrophobic acrylic polymer is present in the aqueous coating composition in an amount in the range of 2 wt% to 40 wt%. For example, in various embodiments as otherwise described herein, the hydrophobic acrylic polymer is present in the aqueous coating composition an amount in the range of 2-35 wt%, or 2-30 wt%, or 2-25 wt%, or 2-20 wt%, or 2-15 wt%, or 2-10 wt%, or 5-40 wt%, or 5-35 wt%, or 5-30 wt%, or 5-25 wt%, or 5-20 wt%, or 5-15 wt%, or 10-40 wt%, or 10-35 wt%, or 10-30 wt%, or 10-25 wt%, or 10-20 wt%, or 15-40 wt%, or 15-35 wt%, or 15-30 wt%, or 15-25 wt%, or 20-40 wt%, or 20-35 wt%, or 20-30 wt%, or 25-40 wt%, or 25-35 wt%, or 30-40 wt%, based on the total weight of the composition.

In various embodiments, the aqueous coating composition includes 20-80 wt% hydrophobic acrylic polymer on a dry solids basis. For example, in various embodiments as otherwise described herein, the aqueous coating composition includes 20-70 wt%, or 20-60 wt%, or 20-50 wt%, or 20-40 wt%, or 20-30 wt%, or 30-80 wt%, or 30-70 wt%, or 30-60 wt%, or 30-50 wt%, or 30-40 wt%, or 40-80 wt%, or 40-70 wt%, or 40-60 wt%, or 40-50 wt%, or 50-80 wt%, or 50-70 wt%, or 50-60 wt% hydrophobic acrylic polymer on a dry solids basis.

The person of ordinary skill in the art will select relative amounts of hydrophobic acrylic polymer, together with other components, to provide desired coating liquid and material properties based on the present disclosure.

Hydrophobic acrylic polymers can be provided as emulsions or dispersions. Examples include MOWLITH 7728 (Celanese) and acrylic primers from EOC Group. Water provided with this emulsion or dispersion must be accounted for when calculating final water content of the aqueous coating composition. The hydrophilic acrylic polymer can, for example, be provided as an emulsion or dispersion in an amount in the range of 10-60 wt% of the total weight of the aqueous coating composition, for example, e.g., 10-50 wt%, or 10-40 wt%, or 10-30 wt%, or 10-20 wt%, or 20-60 wt%, or 20-50 wt%, or 20-40 wt%, or 20-30 wt%, or 30-60 wt%, or 30-50 wt%, or 30-40 wt%, or 40-60 wt%, or 40-50 wt%, or 50-60 wt%, based on the total weight of the composition. In various embodiments, the emulsion or dispersion of the hydrophobic acrylic polymer has viscosity in the range of 1000 to 3000 mPa·s. For example, in some embodiments of the present disclosure as described herein, the emulsion or dispersion of hydrophobic acrylic polymer has viscosity in the range of 1000-2500 mPa s, or 1000-2000 mPa s, or 1500-3000 mPa s, or 1500-2500 mPa s, or 2000-3000 mPa·s. In various embodiments of the present disclosure as described herein, the emulsion or dispersion of the hydrophobic acrylic polymer has a pH in the range of 5 to 8, e.g., in the range of 7 to 8.

In various embodiments of the present disclosure as described herein, the composition further comprises solar-reflective particles (i.e., other than the near-infrared reflective colored pigment). In various embodiments as otherwise described herein, the reflective particles are present in an amount in the range of 1 wt% to 15 wt%, based on the total weight of the composition. For example, in some embodiments of the present disclosure as described herein, the reflective particles are present in an amount in the range of 1-12 wt%, or 1-10 wt%, or 1-8 wt%, or 1-5 wt%, or 2-15 wt%, or 2-12 wt%, or 2-10 wt%, or 2-8 wt%, or 2-5 wt%, or 5-15 wt%, or 5-12 wt%, or 5-10 wt%, or 7-15 wt%, or 7-12 wt%, or 10-15 wt%, based on the total weight of the composition. In various embodiments, the reflective particles are present in an amount in the range of 2-30 wt% on a dry solids basis. For example, in some embodiments of the present disclosure as described herein, the reflective particles are present in an amount in the range of 2-25 wt%, or 2-20 wt%, or 2-15 wt%, or 2-10 wt%, or 5-30 wt%, or 5-25 wt%, or 5-20 wt%, or 5-15 wt%, or 5-10 wt%, or 10-30 wt%, or 10-25 wt%, or 10-20 wt%, or 15-30 wt%, or 15-25 wt%, or 20-30 wt%, on a dry solids basis. A variety of solar-reflective particles can be used, generally selected any solar-reflective particle as known to those skilled in the art. For example, in various embodiments of the present disclosure, the reflective particles one or more of titanium dioxide, aluminum oxide, iron oxide, zinc oxide, and combinations thereof. In particular embodiments, the reflective particles are titanium oxide. Also suitable as reflective particles are glass or polymer-based microspheres.

In various embodiments as otherwise described herein, the coating further comprises a mineral filler. For example, in some embodiments, the mineral filler is present in in the aqueous coating composition in an amount in the range of 0.5-30 wt% (e.g. in the range of 0.5-20 wt%, or 0.5-15 wt%, or 0.5-10 wt%, or 2-30 wt%, or 2-20 wt%, or 2-15 wt%, or 2-10 wt%, or 5-30 wt%, or 5-20 wt%, or 5-15 wt%, or 10-30 wt%, or 10-20 wt%, or 15-30 wt%), based on the total weight of the composition. In some embodiments of the present disclosure as described herein, the mineral filler is present in an amount in the range of 1-60 wt% (e.g. in the range of 1-40 wt%, or 1-30 wt%, or 1-20 wt%, or 5-60 wt%, or 5-40 wt%, or 5-30 wt%, or 5-20 wt%, or 10-60 wt%, or 10-40 wt%, or 10-30 wt%, or 20-60 wt%, or 20-40 wt%, or 30-60 wt%), on a dry solids basis. The mineral filler is not particularly limited and can be selected based on the desired properties of the coating as described herein. For example, the filler may be independently selected from the group consisting of calcium carbonate, barium sulfate, clay, talcum, dolomite, mica, sand, silica, aluminum oxide, crushed basalt, kaolin, and calcined kaolin. In particular embodiments, the filler is calcium carbonate.

It is desirable to efficiently disperse the crosslinking particles and any other inorganic materials (e.g., near-infrared reflective colored pigments, solar-reflective particles, fillers) and to stabilize the dispersion so that the particles do not settle during storage. Accordingly, it can be desirable to include a dispersant in the aqueous coating compositions of the disclosure. For example, the dispersant may be a surfactant and preferably is a non-ionic surfactant. In various embodiments as otherwise described herein, the dispersant is present in an amount in the range of up to 10 wt%, based on the dry weight of the composition (i.e., on a dry solids basis). For example, in various embodiments, the dispersant is present in an amount in the range of up to 5 wt%, e.g., up to 2 wt%, or up to 1 wt%, or 0.05-5 wt%, or 0.05-2 wt%, or 0.05-1 wt%, or 0.05-0.5 wt%, or 0.1-5 wt%, or 0.1-2 wt%, or 0.1-1 wt%, or 0.1-0.5 wt%, based on the dry weight of the composition.

An additional thickening agent (i.e., other than the pseudoplastic thickening agent) can also be used in the aqueous coating composition. A thickening agent can help provide a desirable viscosity for processing, and especially can help to tune a desired pseudoplastic behavior of the aqueous coating composition. The thickening agent is not particularly limited and can be selected based on the desired properties of the coating as described herein. For example, the thickening agent may be a water soluble organic polymer such as cellulose derivatives, salts of poly(acrylic acid) and copolymers thereof, xanthan gum, guar gum, and poly(vinyl alcohol). In various embodiments of the present disclosure as described herein, the thickening agent is present in an amount of 0.1-2 wt%, or 0.1-1.5 wt%, or 0.1-1.0 wt%, or 0.5-2 wt%, or 0.5-1.5 wt%, or 0.5-1 wt%, based on the dry weight of the composition. The total amount of dispersant and thickening agent is, in certain desirable embodiments, no more than 10 wt% of the dry weight (e.g., no more than 8 wt% or no more than 5 wt%) of the dry weight of the aqueous coating composition. But in other embodiments, no other thickener is used.

In certain embodiments of the present disclosure as described herein, the composition further includes a coalescing agent. The coalescing agent is not particularly limited and can be selected based on the desired properties of the coating as described herein. For example, in some embodiments the coalescing agent may be propylene glycol phenyl ether, ethylene glycol, Texanol, or a modified urea. In particular embodiments, the coalescing agent is a modified urea. If present, the coalescing agent can be present, for example, in an amount in the range of 1-15 wt% (e.g. in the range of 1-10 wt%, or 1-7 wt%, or 1-5 wt%, or 2-15 wt%, or 2-10 wt%, or 2-7 wt%, or 5-15 wt%, or 5-10 wt%, or 10-15 wt%), based on the dry weight of the composition.

Notably, the aqueous coating compositions described herein can be made to have pseudoplastic behavior. As the person of ordinary skill in the art will appreciate, a pseudoplastic material is one that exhibits relatively low viscosity at high shear, and relatively high viscosity at low shear. The present inventors have noted that this can allow for a coating composition to be coated using a high-shear technique like spray-coating, while providing the initially-coated wet coating with a low tendency to run, e.g., due to gravity. For example, in various embodiments, the coating composition has a Brookfield viscosity (spindle 5) at 23 °C of at least 30,000 cP at 0.3 rpm; and no more than 3000 cP at 100 rpm. In various embodiments, the coating composition has a Brookfield viscosity (spindle 5) at 23 °C of at least 40,000 cP at 0.3 rpm; and no more than 2000 cP at 100 rpm. In various embodiments, the coating composition has a Brookfield viscosity (spindle 5) at 23 °C and 0.3 rpm that is at least 2.5 times (e.g., at least 5 times) a Brookfield viscosity (spindle 5) at 23 °C and 100 rpm of the coating composition. In various embodiments, the coating composition has a Brookfield viscosity (spindle 5) at 23 °C and 0.3 rpm that is at least 10 times (e.g., at least 20 times) a Brookfield viscosity (spindle 5) at 23 °C and 100 rpm of the coating composition. Viscosities are measured at a given revolution rate until the viscosity reaches a stable viscosity, which takes longer at lower revolution rates. The person of ordinary skill in the art will determine a desired degree of pseudoplastic behavior, and will use an appropriate type and amount of pseudoplastic agent to provide such behavior, along with other rheological properties to provide an aqueous coating composition that is dispensable using any desired method, and to provide a dried coating of a desired thickness.

The present inventors have noted that when the coating compositions of the disclosure are reasonably alkaline in character, dispersion of pigment is improved. Accordingly, in various embodiments, the coating composition has a pH of at least 9.0, e.g., at least 9.3, or at least 9.5. In various embodiments, the coating composition has a pH in the range of 9.0-12.0, e.g., 9.0-11.5, or 9.0-11.0, or 9.0-10.5, or 9.0-10.0. In various embodiments, the coating composition has a pH in the range of 9.3-12.0, e.g., 9.3-11.5, or 9.3-11.0, or 9.3-10.5, or 9.3-10.0. In various embodiments, the coating composition has a pH in the range of 9.5-12.0, e.g., 9.5-11.5, or 9.5-11.0, or 9.5-10.5, or 9.5-10.0.

As noted above, the coating compositions of the disclosure can provide colored coatings that have a relatively deep color while providing an improvement in solar reflectance as compared to conventional deeply-colored materials. In various embodiments, the coating composition, when formed into a 250 micron thick dry coating on a silicon substrate, has an L* value of on the CIELAB color space of no more than 60, e.g., no more than 55. In various embodiments, the coating composition, when formed into a 250 micron thick dry coating on a silicon substrate, has an L* value of on the CIELAB color space of no more than 50, e.g., no more than 45. In various embodiments, the coating composition, when formed into a 250 micron thick dry coating on a silicon substrate , has an L* value of on the CIELAB color space of no more than 40, e.g., no more than 35. In various embodiments, the coating composition, when formed into a 250 micron thick dry coating on a silicon substrate, has an L* value of on the CIELAB color space of no more than 30, e.g., no more than 35.

The color can be varied as well. As the person of ordinary skill in the art will appreciate, values of a* and b* on the CIELAB color scale closer to zero are more white, grey or black (depending on the L* value). In various embodiments, the coating composition, when formed into a 250 micron thick dry coating on a silicon substrate, exhibits a value of (a²+b²)^{1/2} of at least 20, e.g., at least 25. In various embodiments, the coating composition, when formed into a 250 micron thick dry coating on a silicon substrate, exhibits a value of (a²+b²)^{1/2} of at least 30, e.g., at least 35. In some embodiments, the coating composition, when formed into a 250 micron thick dry coating, exhibits a value of (a²+b²)^{1/2} of at least 40, e.g., at least 45. In some embodiments, the coating composition, when formed into a 250 micron thick dry coating on a silicon substrate, exhibits a value of (a²+b²)^{1/2} of at least 50, e.g., at least 55.

The coating compositions can be used to provide coatings of a variety of apparent colors. In some embodiments, the apparent color of the coating is black, or grey, or brown, or green, or blue. However, other colors can be devised by the person of ordinary skill in the art.

In some embodiments, for example, when a near-infrared reflective colored pigment is used, or when a colorant is used in conjunction with different solar-reflective material such as titanium dioxide, the coating compositions of the disclosure can provide colored coatings that have a relatively deep color while providing an improvement in solar reflectance as compared to conventional deeply-colored materials.

In various embodiments, the materials of the disclosure can be characterized by their reflective properties. Such reflective properties for materials described herein are quantified by measuring the solar reflectance and thermal emittance of such coating and calculating the solar reflective index (SRI). The SRI is a measure of the coating's ability to reject solar heat and combines the direct solar reflectance (SR) and thermal emittance (TE) values into a single value following the standard ASTM E1980-11. In various embodiments of the present disclosure, the coating composition, when formed into a dry coating 250 microns in thickness on a silicon substrate, has a solar reflectance (SR) of at least 25%, e.g., at least 30%, or at least 35%, or at least 40%. In various embodiments of the present disclosure, the coating composition, when formed into a dry coating 250 microns in thickness on a silicon substrate, has a solar reflectance (SR) in the range of 25-80% (e.g., in the range of 30-80%, or 35-80%, or 40-80%, or 25-75%, or 30-75%, or 35-75%, or 40-75%). In various embodiments of the present disclosure as described herein, the coating composition, when formed into a dry coating 250 microns in thickness, has a thermal emittance (TE) of at least 70%, e.g., at least 80%, or at least 90%. In various embodiments of the disclosure as described herein, the coating composition, when formed into a dry coating 250 microns in thickness on a silicon substrate, has a thermal emittance (TE) in the range of 70-100% (e.g., in the range of 70-95%, or 70-95%, or 80-100%, or 80-95%, or 90-100%, or 90-95%). In some embodiments of the present disclosure as described herein, the coating composition, when formed into a dry coating 250 microns in thickness on a silicon substrate, has a solar reflectance index (SRI) of at least 90 (e.g., of at least 95, or at least 100). For example, in some embodiments, the coating composition, when formed into a dry coating 250 microns in thickness on a silicon substrate, has a SRI in the range of 60-120, e.g., in the range of 70-120, or 80-120, or 90-120, or 100-120, or 60-110, or 70-110, or 80-110, or 90-110, or 60-100, or 70-100, or 80-100, or 60-90, or 70-90, or 60-80. Reflectance properties are obtained using Perkin Elmer's LAMBDA 900/950 spectrophotometers, which measure the reflectance or transmission of light in the UV, UV-visible, and near-infrared (length range wave: 175 nm - 3,300 nm). A solar spectrophotometer illuminates a surface with monochromatic light at near-normal incidence and measures light reflected into an integrating sphere. A series of such measurements at wavelengths spanning the solar spectrum (300 - 2500 nm) yields the surface's near-normal beam hemispherical solar spectral reflectance rb,nn(λ). While wavelength spacing is arbitrary, we find measuring solar spectral reflectance at a 5 nm interval sufficient to capture the spectral details of most surfaces. See generally R. Levinson et al., "Measuring solar reflectance Part II: Review of practical methods," available at https://www.osti.gov/servlets/purl/984959.

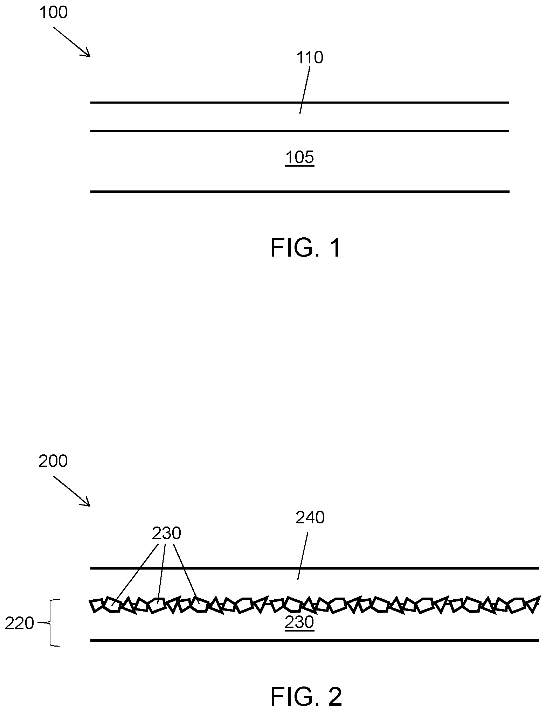

Another aspect of the disclosure is a coated surface comprising a substrate having a layer of an aqueous coating composition as described herein. An example is shown in FIG. 1. Here, coated surface 100 includes a substrate 105 and a layer of an aqueous coating composition 110. The person of ordinary skill in the art can use any desirable method to make a coated surface. For example, a layer of aqueous coating composition can be provided on a desired substrate by spray coating, brush coating or roll coating of a coating composition as described herein. Such methods are generally suitable for field application, e.g., on a surface of a building or some other structure desired to be coated. When the coating is to be applied in a factory setting, other methods, such as curtain coating, can be used. Fluid bed coating can be used to coat particulate substrates such as roofing granules. In various embodiments, the layer of coating composition has a thickness in the range of 25 to 1000 µm (e.g. in the range of 25 to 800 µm, or 25 to 500 µm, or 50 to 1000 µm, or 50 to 800 µm, or 50 to 500 µm, or 75 to 1000 µm, or 75 to 800 µm, or 75 to 500 µm). As described herein, such a coating composition can be dried to provide a coating of the disclosure.

Another aspect of the disclosure is a coating that is a coated dried product of a coating composition as described herein.

Another aspect of the disclosure is a coating that comprises
a functionalized anionic polyurethane present in an amount in the range of 20-80 wt% of the composition on a dry solids basis;
a water-insoluble transition metal crosslinking agent present in an amount in the range of 0.5-30 wt% of the composition on a dry solids basis; and
a pseudoplastic thickener in an amount in the range of 0.02 wt% to 4 wt% on a dry solids basis; and
at least one colorant (e.g., a near-infrared reflective pigment) present in an amount in the range of 0.2 wt% to 40 wt% on a dry solids basis.

The coatings of the disclosure can include a variety of amounts of component materials. The dry weight percentages described above with reference to the aqueous coating compositions also apply to the coatings of the disclosure.

In some embodiments of the present disclosure, the coating is produced by a process comprising drying the coating composition as described herein on a surface of a substrate. Application of the coating composition is not particularly limited and can be applied by any method as known by those in the art. For example, the coating composition can be applied by spray coating, roll coating, brush coating or curtain coating of the composition on the substrate. In some embodiments, the coating composition is sprayed onto the substrate.

The aqueous coating composition can be allowed to dry to provide the coating. While simply allowing the layer of aqueous coating composition to dry in ambient conditions will typically be sufficient, the person of ordinary skill in the art will appreciate that in some embodiments heat or airflow can be provided to dry the coating.

After drying the applied coating composition as described herein, a coating is formed on the substrate. The coating can be provided with a variety of coverage rates. In some embodiments of the present disclosure as described herein, the coating has a dry coverage rate in the range of 100-2000 g/m², e.g., in the range of 200-2000 g/m², or 400-2000 g/m², or 600-2000 g/m², or 100-1000 g/m², or 200-1000 g/m², or 400-1000 g/m², or 100-500 g/m², or 200-500 g/m². In various embodiments (including various of the ranges described above), the coating has a dry coverage rate of less than 350 g/m², e.g., in the range of 100-350 g/m² (e.g., in the range of 150-350 g/m², or 200-350 g/m², or 100-300 g/m², or 150-300 g/m², or 200-300 g/m²).

Similarly, the coating can be provided with a variety of thicknesses. In some embodiments of the present disclosure, the coating has a thickness in the range of 25 to 2000 µm, e.g., 50-2000 µm, or 100-2000 µm, or 250-2000 µm, or 500- 2000 µm, or 1000-2000 µm, or 25-1000 µm, or 50-1000 µm, or 100-2000 µm, or 250-2000 µm, or 500-1000 µm. In some embodiments of the present disclosure, the coating has a thickness in the range of 25 to 300 µm. For example, in some embodiments, the film has a thickness in the range of 25 to 200 µm, or 25 to 100 µm, or 50 to 300 µm, or 50 to 200 µm, or 50 to 100 µm, or 75 to 300 µm, or 75 to 200 µm, or 75 to 150 µm.

Another aspect of the present disclosure provides a coated substrate comprising a substrate having a coating as described herein disposed thereon. This can be as described for the coated substrate having the aqueous coating composition as described with respect to FIG. 1 above, with the coating composition having dried.

Another aspect of the disclosure is a roofing material comprising a roofing product (e.g., as a "substrate"); and a coating as described herein disposed on top of the roofing product. FIG. 2 depicts such a roofing product as described herein, here, in which the roofing product 200 is a bituminous membrane 210 including a bituminous substrate 220 having roofing granules 230 disposed thereon, with the coating 240 disposed on top of the bituminous membrane. A roofing material based on a roofing shingle could have a similar structure. But the person of ordinary skill in the art will appreciate that a wide variety of other substrates, including other roofing products and other building materials, can be suitably coated with the coatings described herein.

For example, in various embodiments as otherwise described herein, the roofing product is a roofing membrane. The roofing membrane can in some embodiments be a bituminous membrane, e.g., having a bituminous substrate having a top surface and roofing granules adhered to the top surface of the bituminous substrate. In other embodiments, the roofing membrane is a thermoplastic membrane.

In other embodiments as otherwise described herein, the roofing product is a roofing shingle, e.g., having a having a bituminous substrate having a top surface and roofing granules adhered to the top surface of the bituminous substrate.

Bituminous roofing products can be made by any means as known in the art. For example, in certain embodiments as otherwise described herein, the substrate has a top surface and a bottom surface, having a bituminous composition disposed thereon. The substrate can also be porous. As the person of ordinary skill in the art will appreciate, the bituminous composition can be coated on both surfaces of, or even saturate, the substrate. A variety of materials can be used as the substrate, for example, conventional bituminous shingle or membrane substrates such as roofing felt or fiberglass. The bituminous composition also has a top surface. A plurality of roofing granules is adhered on the top surface of the shingle (e.g., the top surface of the bituminous composition), such that the roofing granules substantially coat the bituminous composition in a region thereof. The region can be, for example, the exposure zone of a roofing shingle, or a region that is otherwise to be exposed when the roofing product is installed on a roof. The roofing granules are desirably embedded somewhat in the bituminous composition to provide for a high degree of adhesion. As the person of ordinary skill in the art will appreciate, other granular or particulate material can coat the bituminous composition in regions that will not be exposed, e.g., on a bottom surface of the roofing shingle, or in a headlap zone of a top surface of the roofing shingle, as is conventional. The plurality of roofing granules is not particularly limited and can be selected from any roofing granules known to those in the art. For example, the plurality of roofing granules may include water-resistant roofing granules, algae-resistant roofing granules, or solar reflective roofing granules.

As described above, the reflective properties of roofing materials are important in characterizing such products for use in cool roofing systems. As with the coating composition, the roofing product can be characterized by its SR, TE, and SRI. The roofing product can have, in some embodiments, the values as described above for the coating.

In various embodiments, the roofing product includes a bituminous substrate and roofing granules adhered to a top surface of the bituminous substrate, e.g., as a bituminous roofing membrane or a bituminous roofing shingle. Notably, non-solar-reflective granules can be used. In various such embodiments, the roofing granules have a solar reflectance no more than 60, e.g., no more than 50, or no more than 40, or no more than 30, or no more than 25, or no more than 20, or no more than 15.

Moreover, in various embodiments, the roofing granules of the roofing product to be coated can be generally grey or white in color. For example, in some embodiments, the roofing granules have a value of (a²+b²)^{1/2} on the CIELAB color space of no more than 30 in absolute value, e.g., no more than 20 in absolute value, or no more than 10 in absolute value.

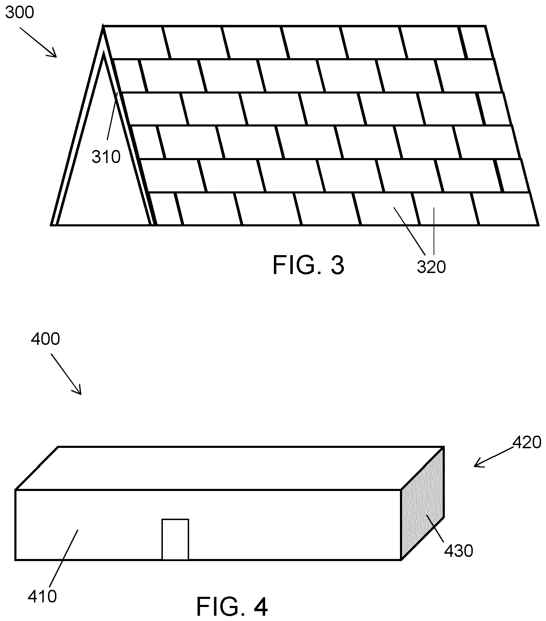

Another aspect of the disclosure is a roof comprising a roof deck and a roofing material as described herein disposed thereon. For example, in some embodiments, the roofing material is a roofing membrane. In other embodiments, the roofing material is a roofing shingle, e.g., provided as an array of overlapping shingles. An example of a roof according to the disclosure is shown in schematic perspective view in FIG. 3. Roof 300 includes a roof deck 310 and a roofing material, here, shingles 320 disposed thereon.

Roofing materials can be provided with the coatings of the disclosure in a variety of manners. In various embodiments, the coatings can be applied in a manufacturing plant, then the roofing materials can be packaged and delivered to a job site for installation. However, in other embodiments, the coatings can be applied after the roofing product is installed on a roof. For example, the coatings can be applied shortly after the roofing product is installed, e.g., within a week or within a month. However, the coatings can alternatively be applied to retrofit a roof, e.g., after the roofing product has been on the roof for some time, e.g., at least a year or even at least two years. This can provide existing roofs with a new coating (e.g., to provide a new coloration) in a convenient manner.

The coatings described herein can be used on a variety of substrates other than roofing products. They can be coated directly on a wide variety of surfaces, e.g., concrete, stucco, mortars, brick, wood, plastic such as PVC, metals such as steel, fiberglass composites. For example, the coatings can be used on a variety of building surfaces other than roofing products. For example, in various embodiments, and as shown in schematic perspective view in FIG. 4, a building 400 includes a surface 410 having a coating 420 of the disclosure formed thereon. The building surface can be formed of a variety of materials, e.g., a roofing product as described herein, but alternatively a material such as those described above. For example, building surfaces made of concrete, brick, wood, metal such as steel, plastic such as PVC, or fiberglass composite can be coated with the coatings of the disclosure. The coatings can themselves provide water protection, especially when provided in relatively thick layers, e.g., at least 700 microns or at least 1000 microns. The coatings can be coated in a single application or through the buildup of multiple layers (e.g., with at least partial drying between applications). The coating can be directly on the building surface, or there may be other materials disposed between the building surface and the coating of the disclosure. Desirably, the coating of the disclosure is an outermost layer.

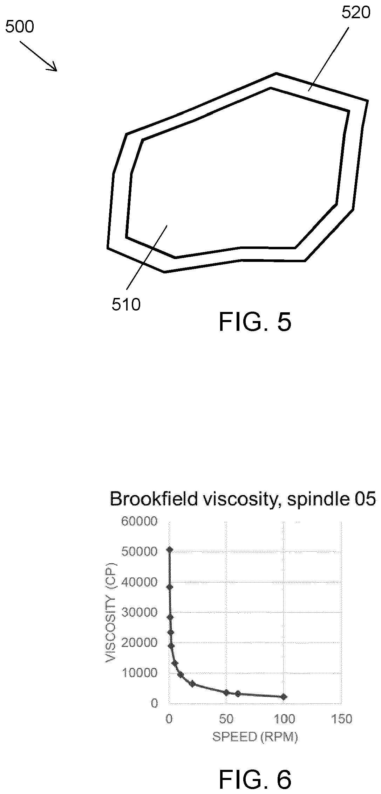

Another aspect of the disclosure is a collection of roofing granules, each comprising a base particle and a coating as described herein coating the base particle. One such roofing granule is shown in schematic cross-sectional view in FIG. 5. Roofing granule 500 includes a base particle 510 and a coating 510 of the disclosure disposed thereon.

Mineral particles can advantageously be used as base particles in the granules of the disclosure. Examples of suitable base particles for use in the present invention include durable, inert inorganic particles with particle size between #8 to #50 US mesh and good compression strength to endure the coloring and shingle-making process.

In one aspect, the base particles employed in the process of the present invention are preferably chemically inert materials, such as inert mineral particles. The mineral particles, which can be produced by a series of quarrying, crushing, and screening operations, are generally intermediate between sand and gravel in size (that is, between about 8 US mesh and 70 US mesh), and preferably have an average particle size of from about 0.2 mm to about 3 mm, and more preferably from about 0.4 mm to about 2.4 mm.

In particular, suitably sized particles of naturally occurring materials such as talc, slag, granite, silica sand, greenstone, andesite, porphyry, marble, syenite, rhyolite, diabase, greystone, quartz, slate, trap rock, basalt, and marine shells can be used, as well as recycled manufactured materials such as crushed bricks, concrete, porcelain, fire clay, and the like. Preformed ceramic materials can also be used. The base particles can have a variety of colors, e.g., grey, white or brown. The person of ordinary skill in the art will appreciate that a wide variety of base particles can be used in making the roofing granules of the disclosure.

In some embodiments, the base particles comprise particles having a generally plate-like geometry. Examples of generally plate-like particles include mica and flaky slate. Roofing granules having a generally plate-like geometry have been found to provide greater surface coverage when used to prepare bituminous roofing products, when compared with conventional "cubical" roofing granules, such as disclosed in commonly assigned U.S. Patent Publication No. 20050072114 A1, which is incorporated herein by reference in its entirety for its teachings of plate-like geometries as well as its teachings of coating methods that can be adapted for use to make the granules of the disclosure.

In another aspect, the base particles are roofing granules prepared by conventional or known processes, such as roofing granules formed from inert mineral particles coated with a cured silicate coating layer including one or more metal oxide colorants. That is, the base particles can themselves be roofing granules.

The roofing granules of the disclosure can be made by coating the coating composition of the disclosure onto base particles, then allowing the coating composition to dry to provide the coated granules.

The person of ordinary skill in the art can adapt known coating techniques for coating the granules of the disclosure. In one especially desirable embodiment, fluidized bed coating is used to coat the coating composition onto the granules. For example, in some embodiments, a coating method includes (a) suspending the base particles in a first fluid medium to separate the individual particles; (b) depositing the coating composition on the surfaces of the selected base particles; and (c) allowing the coating composition to dry to form the coating of the disclosure on the base particles. Fluidized bed coating of roofing granules is described in more detail in U.S. Patent Application Publication no. 2006/0251807, which is hereby incorporated herein by reference in its entirety.

Air can be used to suspend the base particles for coating, but the person of ordinary skill in the art will appreciate that other gases can be used, such as nitrogen or other inert gases. The suspension medium can be heated, cooled, or pH-controlled to facilitate the coating curing process.

For example, the Wurster fluidized bed coating process can be employed. In the Wurster method, such as disclosed, for example in U.S. Pat. No. 2,799,241, U.S. Pat. No. 3,089,824, U.S. Pat. No. 3,117,024, U.S. Pat. No. 3,196,827, U.S. Pat. No. 3,207,824, U.S. Pat. No. 3,241,520, U.S. Pat. No. 3,253,944, and U.S. Pat. No. 4, 623,588, the roofing granules are suspended in an upward stream of air, while liquid coating material is sprayed up into the suspended granules.

Wurster-type fluidized bed spray devices are available from a number of vendors, including Glatt Air Techniques, Inc., Ramsey, NJ; Chungjin Tech. Co. Ltd., South Korea; Fluid Air Inc., Aurora, IL; GEA (Denmark); Freund Vector (and Niro Inc., Columbia, MD

The nature, extent, and thickness of the coating provided in a Wurster-type fluidized bed spray device depends upon a number of parameters including the residence time of the particles in the device, the particle shape, the particle size distribution, the temperature of the suspending airflow, the temperature of the fluidized bed of particles, the pressure of the suspending airflow, the pressure of the atomizing air, the composition of the coating material, the size of the droplets of coating material, the size of the droplets of coating material relative to the size of the particles to be coated, the spreadability of the droplets of coating material on the surface of the particles to be coated, the loading of the device with the mineral particles or batch size, the viscosity of the coating material, the physical dimensions of the device, and the spray rate.

Modified Wurster-type devices and processes, such as, the Wurster-type coating device disclosed in U.S. Patent Publication 20050069707 for improving the coating of asymmetric particles, can also be employed. In addition, lining the interior surface of the coating device with abrasion-resistant materials can be employed to extend the service life of the coater.

Other types of batch process particle fluidized bed spray coating techniques and devices can be used. For example, the particles can be suspended in a fluidized bed, and the coating material can be applied tangentially to the flow of the fluidized bed, as by use of a rotary device to impart motion to the coating material droplets.

In the alternative, other types of particle fluidized bed spray coatings can be employed. For example, the particles can be suspended as a fluidized bed, and coated by spray application of a coating material from above the fluidized bed. In another alternative, the particles can be suspended in a fluidized bed, and coated by spray application of a coating material from below the fluidized bed, such as is described in detail above. In either case, the coating material can be applied in either a batch process or a continuous process. In coating devices used in continuous processes, uncoated particles enter the fluidized bed and can travel through several zones, such as a preheating zone, a spray application zone, and a drying zone, before the coated particles exit the device. Further, the particles can travel through multiple zones in which different coating layers are applied as the particles travel thought the corresponding coating zones.

### EXAMPLES

The Examples that follow are illustrative of specific embodiments of the coating composition and roofing product of the disclosure, and various uses thereof. They are set forth for explanatory purposes only, and are not to be taken as limiting the scope of the disclosure.

### Example 1. Colored coatings and formulation thereof

A variety of colored coating compositions were prepared, as shown in the Table 2 below:

**Table 2: Examples of colored coating compositions**

| | 1. Shale | 2. Suede | 3. Blue Gray | 4. Smoke |
|---|---|---|---|---|
| | Weight (%) | | | |
| Deionized Water | 7.2 | 7.2 | 7.2 | 7.2 |
| AMP^{™} 90 | 0.4 | 0.4 | 0.4 | 0.4 |
| TAFIGEL^{®} Pur 61 | 0.1 | 0.1 | 0.1 | 0.1 |
| BYK 024 | 1.0 | 1.0 | 1.0 | 1.0 |
| DISPEX^{®} CX4231 | 0.5 | 0.5 | 0.5 | 0.5 |
| FOAMSTAR^{®} SI2210 | 0.3 | 0.3 | 0.3 | 0.3 |
| TiO₂ (Venator) | 3.0 | 2.0 | 5.2 | 4.2 |
| CaCO₃ (Imerseal 96S) | 35.4 | 33.5 | 35.5 | 28.6 |
| ZnO (Norzinco CF) | 1.0 | 1 | 1.0 | 1 |
| Ferro V-760Q BLACK | 4.43 | | 0.2 | 5.78 |
| Ferro FP-40 Blue | | | | 3.43 |
| Ferro V-1164Q Green | 0.66 | 2.28 | 1.36 | 1 |
| Ferro 10550Q BROWN | | 5.48 | | |
| Ferro Nubiperf AR Blue | | | 1.23 | |
| PUD9 (40% solids) | 46 | 46.2 | 46 | 46.4 |
| | | | | |
| Total | 100 | 100 | 100 | 100 |
| Ratio polymer/inorganic fillers | 0.405 | 0.408 | 0.404 | 0.412 |
| | | | | |

AMP^{™} 90 is 2-amino-2-methyl-1-propanol, provided at 90 wt% concentration with 10 wt% water. This material is used to maintain a high pH of the coating compositionat least 9. Other amine bases can alternatively be used; AMP^{™} 95 is another alternative product. And the person of ordinary skill in the art can use other bases and buffers to provide the coating composition with a pH of at least 9.

TAFIGEL^{®} PUR 61 is a pseudoplastic thickener, provided at about 25 wt% in water. BYK-024 is a defoamer, and is a mixture of foam-destroying polysiloxanes and hydrophobic solids in polyglycol. DISPEX^{®} CX4231 is a poly(acrylic acid)-based dispersant. FOAMSTAR^{®} SI2210 is a defoamer that is a blend of specially modified alcohols and a polysiloxane adduct.

TiO₂ was from Venator having a d50 particle size in the range of 0.25-0.5. A variety of TiO₂ products can be used in the compositions of the disclosure, including Altiris W400, Altiris 550 and Altiris 800 from Venator; Ti-Pure^{™} R-706 TS6300, TS6200, and TS1510 from Chemours; various TiO2 extenders from FP Pigments; and various grades from Kronos.

CaCO₃ was ImerSeal^{®} 96S from Imerys, having a d50 particle size of 0.4 microns. PUD9 is a 40 wt% dispersion of a functionalized anionic polyurethane as described herein. Amounts listed in Table 2 for these materials are the amount of the product added, including any water.

The person of ordinary skill in the art can use a variety of techniques to formulate these aqueous coating compositions. But the present inventors have noted the following: Water (in a minimal amount), dispersant and a portion of the anti-foam component(s) are mixed to create an emulsion, e.g., for about 3 minutes at 1000-1500 rpm using a high-torque disperser (Dispermat). [Inorganic fillers and pigments are added, and the mixture mixed at higher speed (e.g., about 15 minutes at 2500-4500 rpm) to disperse the pigments. This forms a thick mixture, which can collect along the edges of the vessel in a donut shape; more water can be added if necessary. The polyurethane dispersion can be added, then mixed to form a uniform mixture (e.g., about 5 minutes at 1500-2000 rpm). Finally, the balance of the antifoam(s) and the pseudoplastic thickener are added and the mixture mixed (e.g., about one minute at 1500-2000 rpm) to provide a uniform mixture and eliminate any bubbles.

### Example 2. Viscosity testing and Spray-Coating

The viscosity of formulation 3 with 5 wt% added water was tested using a Brookfield viscometer, spindle 5, at room temperature. A graph of viscosity at various rpm settings is provided as FIG. 6. Other coatings of Table 2 exhibited similar viscosity behavior.

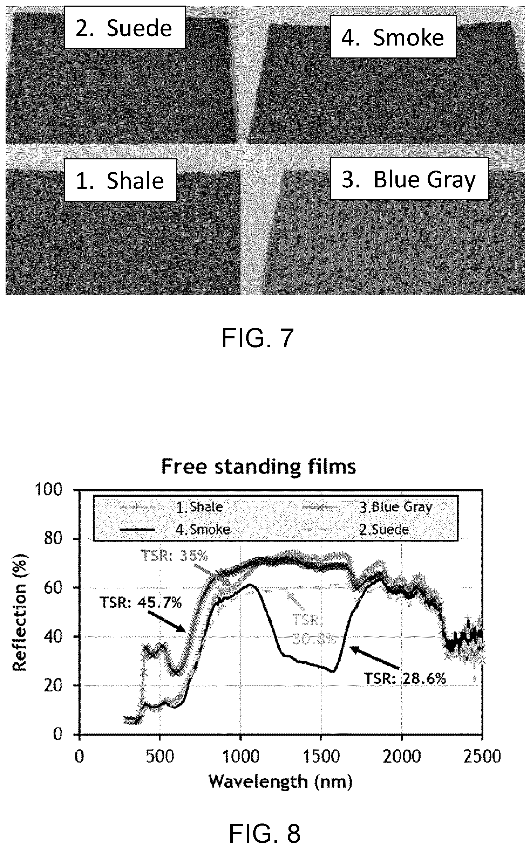

The coatings of Table 2 were coated on granule-coated roofing shingles at room temperature by spray coating at an average dry coverage rate of 250 g/m². Photographs of these coated shingles are provided in FIG. 7.

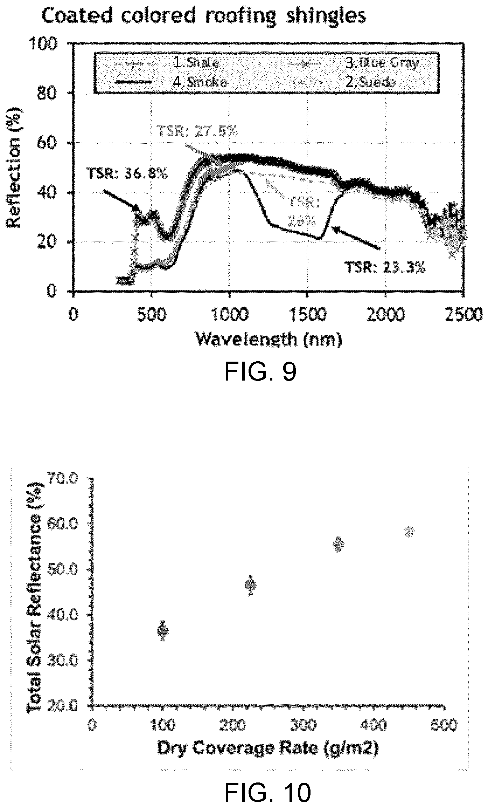

Coatings were also cast as free-standing films, about 200 microns in thickness, by coating liquid formulations on silicone papers with a film applicator (Elcomete 3520). Light reflectance spectra of the free-standing films (FIG. 8) and of the coated shingles described above (FIG. 9) were collected using a LAMBDA 950 spectrophotometer (PerkinElmer).

The shale formulation had a total solar reflectance of 35% for the free-standing film and 27.5% for the coated shingle. The suede formulation had a total solar reflectance of 30.8% for the free-standing film and 26% for the coated shingle. The blue-gray formulation had a total solar reflectance of 45.7% for the free-standing film and 36.8% for the coated shingle. The smoke formulation had a total solar reflectance of 28.6% for the free-standing film and 23.3% for the coated shingle.

The inventors note that reflectivity may be increased in a number of ways, e.g., by using more reflective pigments and/or more TiO₂, or by using a higher coat weight. FIG. 10 is a graph of total solar reflectance vs. dry coverage weight for a blue formulation of the disclosure.

### Example 3. Additional colored coatings

Additional colored coating compositions were made as described in Table 3, below:

**Table 3: Additional examples of colored coating compositions**

| | 5. Terracotta | 6. Blue | 7. Smoke | 8. Terracotta |
|---|---|---|---|---|
| | Amount (g) | | | |
| Deionized Water | 10 | 10 | 10 | |
| AMP^{™} 90 | 0.4 | 0.4 | 0.4 | 0.4 |
| TAFIGEL^{®} Pur 61 | 0.2 | 0.2 | 0.2 | 0.1 |
| BYK 024 | 1.0 | 1.0 | 1.0 | 0.4 |
| DISPEX^{®} CX4231 | 0.5 | 0.5 | 0.5 | 0.5 |
| FOAMSTAR^{®} SI2210 | 0.3 | 0.3 | 0.3 | 0.3 |
| TiO₂ (Venator) | 8.0 | 4.54 | 5.24 | 8 |
| CaCO₃ (Imerseal 96S) | 5.0 | 15.5 | 8 | 3 |
| ZnO (Norzinco CF) | 1.0 | 1.0 | 1.0 | 1 |
| BASF NIR-Black | 0.3 | 0.07 | 4.78 | |
| BASF NIR-red | 2.3 | | | |
| Ferro FP-40 Blue | | 0.39 | 2.57 | |
| Venator Orange | 5.23 | | | |
| Ferro V-1164Q Green | | 0.9 | 1.0 | |
| Ferro 10550Q BROWN | 0.45 | | | |
| Nubifer R-5530 Red | | | | 2.3 |
| 10408-Q Yellow | | | | 4 |
| PUD9 (40% solids) | 80 | 80 | 80 | 80 |
| Total mass (g) | 114 | 114 | 114 | 100 |
| Ratio of polymer to inorganic | 1.4 | 1.4 | 1.4 | 1.7 |
| Solid content (wt%) | 47 | 47 | 47 | 49 |

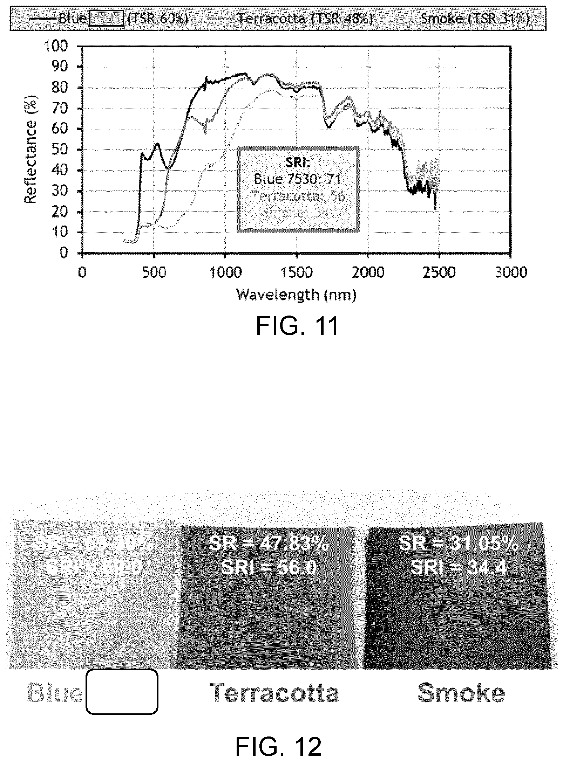

The colored coating compositions were made and cast into free-standing films 250 microns in thickness substantially as described above. FIG. 11 provides reflectance spectra and FIG. 12 provides photographs of the cast films. Data for solar reflectance and solar reflectance index are summarized in Table 4, below. Notably, all of the coatings use less than 10 wt% total of the near infrared-reflective colored pigments.

**Table 4. Reflectance data**

| | TSR (%) | SRI |
|---|---|---|
| Blue | 59.30 | 69.0 |
| Terracotta | 47.83 | 56.0 |
| Smoke | 31.05 | 34.4 |

### Example 4. Fluid bed coating of roofing granules

Base rock granules having a size distribution from U.S. mesh size 8 to U.S. mesh size 40, were spray coated with the formulation 2 (blue gray) - 20% dilution (100 g base) and 30% dilution (150 g base) for 500 g granules using a fluidized bed coating process. The spray coating was carried out at 50 °C, followed by oven drying at about 100-150 °C. The CIELAB color and TSR data for the above two examples is summarized in the table below. The CIELAB color and TSR data was obtained using LabScan^{®} XE spectrophotometer from HunterLab and Solar Spectrum Reflectometer (SSR) Model E from Devices & Services Co., respectively. Data are provided in Table 5, below.

**Table 5: Data for fluid bed-coated granules**

| | CIELAB D65/10 deg. observer | | | Solar reflectance (avg, std dev) |
|---|---|---|---|---|
| | L* (avg, std dev) | a* (avg, std dev) | b* (avg, std dev) | |
| 20% dilution | 50.71 (0.12) | -5.80 (0.03) | -2.67 (0.02) | 29.70 (0.42) |
| 30% dilution | 49.94 (0.11) | -6.16 (0.02) | -2.76 (0.020) | 31.50 (0.59) |

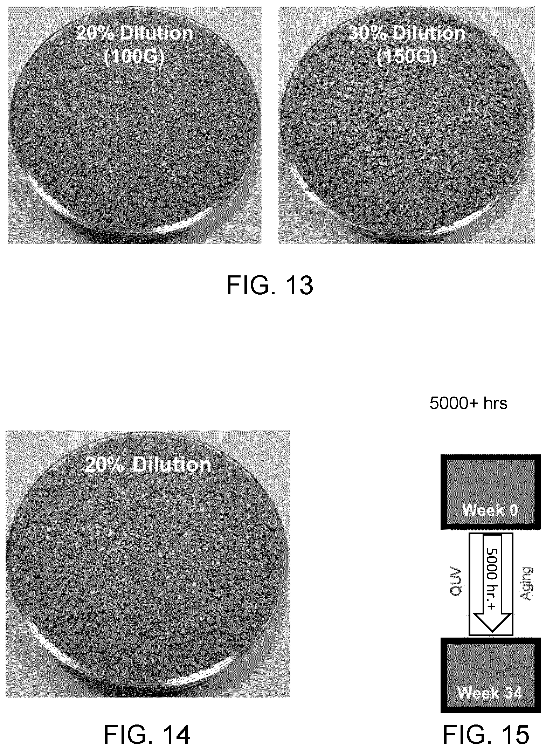

The inventors found that fluidized bed coating process allows deposition of a uniform coating on base granules in a single pass, as can be observed for the above two cases in FIG. 13, for providing dark-colored roofing granules with good reflectivity.

In another experiment, a 20% dilution (120 g base) of formulation 5 was coated onto 500 g of Gads Hill Base Rock; and a 20% dilution (100 g base) of formulation 5 was coated onto 365 g of US Silica white granules. Photographs are provided in FIG. 14. Data are summarized in Table 6, below. The data suggest that using a white or otherwise solar reflective base underneath the coatings of the disclosure can provide improved solar reflectance while generally maintaining color.

**Table 6. Reflectance data**

| | Gads Hill Base Rock | White Granules |
|---|---|---|
| L* (Avg, std. dev, range) | 43.98, 0.07, 0.14 | 46.33, 0.13, 0.27 |
| a* (Avg, std. dev, range) | 21.52, 0.07, 0.15 | 22.43, 0.04, 0.07 |
| b* (Avg, std. dev, range) | 21.40, 0.06, 0.12 | 21.36, 0.03, 0.07 |
| TSR (Avg., std. dev) | 30.80%, 0.68% | 44.80%, 0.29% |

### Example 5. Aging studies on coated roofing granules

To test the weathering resistance of the PUD coating, the coated granules (7580 Blue Gray - 20% dilution) were subjected to QUV aging (alternating cycles of ultraviolet (UV) light and moisture at controlled, elevated temperatures) in a QUV accelerated weathering tester from Q-Lab Corp. The cycles were a) UV cycle for 8 h at 60 °C with UV lamps ON and b) Condensation cycle for 4 h at 50 °C with UV lamps OFF and water heater ON. After about 5000 hours of continuous aging, the aged granules exhibited a color difference (*ΔE**) of less than 1.80 (FIG. 15 provides a visual comparison) and a reduction of total solar reflectance value of less than 2.50%.

### Example 7. Viscosity performance of diluted formulations

A formulation of the composition of Table 7, below was prepared:

**Table 7.**

| | 9. Blue-Gray |
|---|---|
| | Amount (g) |
| AMP^{™} 90 | 5.4 |
| Dispex^{®} CX4231 | 6.7 |
| TAFIGEL^{®} Pur 61 | 1.3 |
| BYK 024 | 13.4 |
| FOAMSTAR^{®} SI2210 | 4 |
| TiO₂ (Venator) | 61 |
| CaCO₃ (Imerseal 96S) | 208.3 |
| ZnO (Norzinco CF) | 9.4 |
| Ferro FP-40 Blue | 5.2 |
| Ferro V-1164Q Green | 12.4 |
| BASF Xfast Black | 0.9 |
| PUD9 (39.1% solids) | 672 |
| Total weight | 1000 |

Dispex^{®} CS 4231 is a dispersant that is a polymeric ammonium salt of a carboxylic acid copolymer, available from BASF.

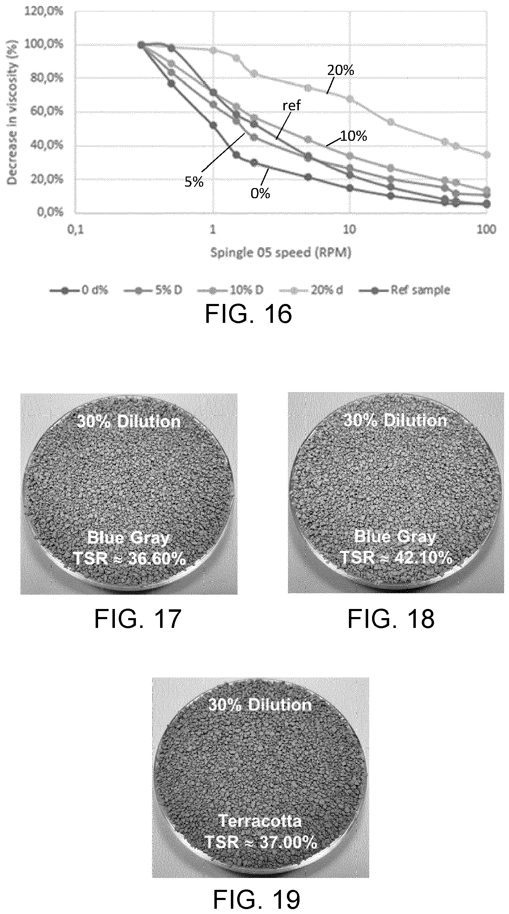

Dilutions were prepared with 5% excess water, 10% excess water and 20% excess water, and the viscosities were measured as described above. Data are shown in FIG. 16.

### Example 8. Additional formulations and roofing granules

Formulations of the compositions of Table 8, below, were prepared:

**Table 8.**

| | 10. Blue-Gray | 11. Blue Gray | 12- Terracotta |
|---|---|---|---|
| | Amount (g) | | |
| Water | 32.75 | 32.75 | 31.49 |
| RHEOBYK-L 1400 VF | 0.19 | 0.2 | 0.19 |
| Dispex^{®} CX4231 | 0.58 | 0.56 | 0.54 |
| TAFIGEL^{®} Pur 61 | 0.10 | 0.1 | 0.1 |
| BYK 337 | 0.04 | 0.04 | 0.04 |
| Aquacer 513 (BYK) | 2.00 | 2.00 | 2.00 |
| FOAMSTAR^{®} SI2210 | 0.43 | 0.53 | 0.52 |
| SILRES BS 68 | | | 3.85 |
| TiO₂ (Altris 550) | 9.07 | 3.97 | 4.48 |
| CaCO₃ (Imerseal 96S) | 20.41 | | |
| FP460 | | 25.51 | 17.86 |
| ZnO (Norzinco CF) | 1.00 | 1.00 | 1.00 |
| Ferro FP-40 Blue | 1.04 | 1.04 | |
| Ferro V-1164Q Green | 2.36 | 2.36 | |
| Ferro V-760Q Black | 0.26 | 0.26 | |
| Nubifer R-5530 Red | | | 3.31 |
| 10408 Q Yellow | | | 6.10 |
| PUD9 (39.1% solids) | 29.67 | 29.67 | 28.53 |
| Total weight | 100 | 100. | 100 |
| Dry polymer (%) | 11.87 | 11.87 | 11.41 |
| Inorganic (%) | 34.14 | 34.14 | 32.75 |
| Ratio dry/inorganic (%) | 34.76 | 34.76 | 34.84 |
| Solids (%) | 46.01 | 46.01 | 44.16 |

FP460 is a composite pigment supplied by FP-Pigments, comprising calcium carbonate and titanium dioxide. RHEOBYK-L 1400 VF is an aqueous solution of a hydrophobically modified nonionic polymer commonly called an associative thickener. BYK 337 is a silicone surface additive. Aquacer 513 is a wax emulsion based on an oxidized HD polyethylene wax.

Granules were coated with these materials as described above. Photographs are shown in FIGS. 17, 18 and 19, respectively. and optical data were collected as described above and as shown in Table 9, below. Values in parentheses are standard deviations.

**Table 9**

| | 10. Blue-Gray | 11. Blue Gray | 12- Terracotta |
|---|---|---|---|
| CIELAB L* | 51.26 (0.10) | 58.85 (0.08) | 46.91 (0.08) |
| CIELAB a* | -6.37 (0.01) | -6.23 (0.01) | 20.90 (0.02) |
| CIELAB b* | 0.54 (0.00) | -3.58 (0.00) | 15.31 (0.01) |
| Total Solar Reflectance | 36.57% (0.15%) | 42.13% (0.15%) | 36.93% (0.65%) |

It will be apparent to those skilled in the art that various modifications and variations can be made to the processes and devices described here without departing from the scope of the disclosure. Thus, it is intended that the present disclosure cover such modifications and variations of this invention provided they come within the scope of the appended claims and their equivalents.

Additional aspects of the disclosure are provided by the following enumerated embodiments, which can be combined and permuted in any number and in any combination that is not technically or logically inconsistent.

Embodiment 1. An aqueous coating composition comprising:
a functionalized anionic polyurethane present in an amount in the range of 2-40 wt% of the composition;
a water-insoluble transition metal crosslinking agent present in an amount in the range of 0.2-15 wt% of the composition;
water;
a pseudoplastic thickener in an amount in the range of 0.01 wt% to 2 wt% of the composition; and
at least one colorant present in an amount in the range of 0.1 wt% to 20 wt% of the composition.

Embodiment 2. An aqueous coating composition comprising water, and, dispersed in the water,
a functionalized anionic polyurethane present in an amount in the range of 20-80 wt% of the composition on a dry solids basis;
a water-insoluble transition metal crosslinking agent present in an amount in the range of 0.5-30 wt% of the composition on a dry solids basis;
a pseudoplastic thickener in an amount in the range of 0.02 wt% to 4 wt% on a dry solids basis; and
at least one colorant present in an amount in the range of 0.2 wt% to 40 wt% on a dry solids basis.

Embodiment 3. The composition of embodiment 1 or embodiment 2, wherein anions of the functionalized anionic polyurethane are carboxylate anions.

Embodiment 4. The composition of any of embodiments 1-3, wherein the functionalized anionic polyurethane is functionalized with alkoxysilanes.

Embodiment 5. The composition of embodiment 1 or embodiment 2, wherein the functionalized anionic polyurethane comprises both free pendant carboxylate groups of formula -COO⁻ M⁺ where M⁺ is a cation resulting from neutralization of carboxylic acid groups with a base, and pendant carboxylate ester groups resulting from esterification of free carboxylic acid groups with an epoxysilane, such as (3-glycidyloxypropyl)trialkoxysilane.

Embodiment 6. The composition of any of embodiments 1-5, wherein the functionalized anionic polyurethane is the reaction product of a polyisocyanate component and a polyol component, wherein the polyisocyanate component comprises one or more aliphatic polyisocyanates (such as 1,6-hexamethylene-diisocyanate, isophorone-diisocyanate, 2,4-hexahydrotoluene-diisocyanate, 2,6-hexahydrotoluene-diisocyanate, dicyclohexylmethane-diisocyanates, norbornane-diisocyanate, cyclohexane-1,4-diisocyanate, 1,12-dodecane-diisocyanate, and 2,2,4-trimethylhexamethylene-diisocyanate).

Embodiment 7. The composition of any of embodiments 1-6, wherein the wherein the functionalized anionic polyurethane is the reaction product of a polyisocyanate component and a polyol component, wherein the polyisocyanate component comprises one or more aromatic polyisocyanates (such as xylylene-diisocyanate, tetramethylxylylene-diisocyanate, 2,4-toluene-diisocyanate, 2,6-toluene-diisocyanate, and methylene-diphenyl-diisocyanate).

Embodiment 8. The compositions of any of embodiments 1-7, wherein the functionalized anionic polyurethane is the reaction product of a polyisocyanate component and a polyol component, wherein the polyol component includes one or more of polyether-polyols, polyester-polyols, and polycarbonate-polyols.

Embodiment 9. The composition of any of embodiments 1-8, wherein the functionalized anionic polyurethane is the reaction product of a polyisocyanate component and a polyol component, wherein the polyol component includes one or more polyhydroxy carboxylic acids (such as dimethylol propionic acid).

Embodiment 10. The composition of any of embodiments 1-9, wherein the functionalized anionic polyurethane includes one or more urea linkages derived from a polyamine, e.g., ethylenediamine.

Embodiment 11. The composition of any of embodiments 1-10, wherein the functionalized anionic polyurethane is prepared by a process comprising:
reacting a polyol component that includes one or more hydroxylated carboxylic acids with a stoichiometric excess of a polyisocyanate component to form an isocyanate-terminated carboxylic acid-pendant prepolymer;
neutralizing the isocyanate-terminated carboxylic acid-pendant prepolymer with a base to provide an isocyanate-terminated carboxylate-pendant prepolymer; and
reacting the isocyanate-terminated carboxylate-pendant prepolymer with a polyamine to form a polyurethane having pendant carboxylate groups.

Embodiment 12. The composition of embodiment 11, wherein the polyol component includes a polyether-polyol and dihydroxymethyl propionic acid, the polyisocyanate includes an aromatic diisocyanate, and the polyamine is ethylenediamine.

Embodiment 13. The composition of any of embodiments 5-12, wherein the base is an amine-type base (e.g., ethylenediamine).

Embodiment 14. The composition of any of embodiments 5-13 wherein the epoxysilane is selected from the group consisting of 3-glycidyloxypropyl-trialkoxysilanes, 3-glycidyloxypropyl-dialkoxyalkylsilanes, epoxycyclohexylethyltrialkoxy-silanes, epoxycyclohexyl-ethyldialkoxyalkylsilanes, and water-soluble epoxy-functional alkoxysilane oligomers.

Embodiment 15. The composition of any of embodiments 1-14, wherein the functionalized anionic polyurethane is present in an amount in the range of 2-30 wt%, or 2-25 wt%, or 2-20 wt%, or 2-15 wt%, or 5-40 wt%, or 5-30 wt%, or 5-25 wt%, or 5-20 wt%, or 5-15 wt%, or 7-40 wt%, or 7-30 wt%, or 7-25 wt%, or 7-20 wt%, or 7-15 wt%, or 10-40 wt%, or 10-30 wt%, or 10-25 wt%, or 10-20 wt%, based on the total weight of the composition.

Embodiment 16. The composition of any of embodiments 1-15, wherein the functionalized anionic polyurethane is present in an amount in the range of 20-70 wt%, or 20-60 wt%, or 20-50 wt%, or 20-40 wt%, or 20-30 wt%, or 30-80 wt%, or 30-70 wt%, or 30-60 wt%, or 30-50 wt%, or 30-40 wt%, or 40-80 wt%, or 40-70 wt%, or 40-60 wt%, or 40-50 wt%, or 50-80 wt%, or 50-70 wt%, or 50-60 wt%, on a dry solids basis.

Embodiment 17. The composition of any of embodiments 1-16, wherein the water-insoluble transition metal crosslinking agent is a transition metal oxide.

Embodiment 18. The composition of embodiment 17, wherein the transition metal oxide is zinc oxide, aluminum oxide, tin oxide, and/or tungsten oxide.

Embodiment 19. The composition of embodiment 17, wherein the transition metal oxide is zinc oxide.

Embodiment 20. The composition of any of embodiments 1-19, wherein the water-insoluble transition metal crosslinking agent has a median particle diameter in the range of 1-20 microns, e.g., 1.5-15 microns.

Embodiment 21. The composition of any of embodiments 1-20, wherein the water-insoluble transition metal crosslinking agent is present in an amount of 0.2-10 wt%, or 0.2-5 wt%, or 0.2-3 wt%, or 0.5-15 wt%, or 0.5-10 wt%, or 0.5-5 wt%, or 0.5-3 wt%, or 1-15 wt%, or 1-10 wt%, or 1-5 wt%, or 2-15 wt%, or 2-10 wt%, or 2-5 wt%, based on the total weight of the composition.

Embodiment 22. The composition of any of embodiments 1-21, wherein the water-insoluble transition metal crosslinking agent is present in an amount in the range of 0.5-20 wt%, or 0.5-10 wt%, or 0.5-6 wt%, or 1-30 wt%, or 1-20 wt%, or 1-10 wt%, or 1-6 wt%, or 2-30 wt%, or 2-20 wt%, or 2-10 wt%, or 5-30 wt%, or 5-20 wt%, or 5-10 wt%, on a dry solids basis.

Embodiment 23. The composition of any of embodiments 1-22, wherein a weight ratio of water-insoluble transition metal crosslinking agent to functionalized anionic polyurethane is 0.01-0.4, e.g., in the range of 0.02-0.4, or 0.03-0.4, or 0.01-0.25, or 0.02-0.25, or 0.03-0.25, or 0.01-0.15, or 0.02-0.15, or 0.03-0.15.

Embodiment 24. The composition according to any of clams 1-23, wherein the functionalized anionic polyurethane and the water-insoluble transition metal crosslinking agent is provided as a polyurethane dispersion present in an amount in the range of 40 wt% to 80 wt% of the composition and comprising the functionalized anionic polyurethane, the water-insoluble transition metal crosslinking agent, and water.

Embodiment 25. The composition of embodiment 24, wherein the polyurethane dispersion is present in an amount in the range of 50-80 wt%, or 60-80 wt%, or 70-80 wt%, or 40-70 wt%, or 50-70 wt%, or 50-60 wt%, or 40-60 wt%, or 40-50 wt%, or 50-60 wt%, based on the total weight of the composition.

Embodiment 26. The composition of any of embodiments 1-25, wherein the pseudoplastic thickener is present in an amount in the range of 0.01-1 wt%, or 0.01-0.5 wt%, or 0.01-0.25 wt% based on the total weight of the composition, or in the range of 0.02-2 wt%, e.g., 0.02-1 wt%, or 0.02-0.5 wt%, or 0.02-0.25 wt%, based on the total weight of the composition.

Embodiment 27. The composition of any of embodiments 1-25, wherein the pseudoplastic thickener is present in an amount in the range of 0.05-2 wt%, e.g., 0.05-1 wt%, or 0.05-0.5 wt%, or 0.05-0.25 wt%, based on the total weight of the composition.

Embodiment 28. The composition of any of embodiments 1-25, wherein the pseudoplastic thickener is present in an amount in the range of 0.1-1 wt%, e.g., 0.1-0.7 wt%, or 0.1-0.5 wt%, based on the total weight of the composition

Embodiment 29. The composition of any of embodiments 1-25, wherein the pseudoplastic thickener is present in an amount in the range of 0.02-2 wt%, or 0.02-1 wt%, or 0.02-0.5 wt% on a dry solids basis, or in the range of 0.04-4 wt%, e.g., 0.04-2 wt%, or 0.04-1 wt%, or 0.04-0.5 wt%, on a dry solids basis.

Embodiment 30. The composition of any of embodiments 1-25, wherein the pseudoplastic thickener is present in an amount in the range of 0.1-4 wt%, e.g., 0.1-2 wt%, or 0.1-1 wt%, or 0.1-0.5 wt%, on a dry solids basis.

Embodiment 31. The composition of any of embodiments 1-25, wherein the pseudoplastic thickener is present in an amount in the range of 0.2-4 wt%, e.g., 0.2-2 wt%, or 0.2-1 wt%, or 0.2-0.5 wt%, on a dry solids basis.

Embodiment 32. The composition of any of embodiments 1-31, wherein the pseudoplastic thickener is an associative thickener.

Embodiment 33. The composition of any of embodiments 1-32, wherein the pseudoplastic thickener includes (or is) a hydrophobic alkali-swellable polymer (e.g., provided as an emulsion).

Embodiment 34. The composition of any of embodiments 1-33, wherein the pseudoplastic thickener includes (or is) a hydrophobically modified hydroxyethylcellulose

Embodiment 35. The composition of any of embodiments 1-34, wherein the pseudoplastic thickener includes (or is) a hydrophobically modified ethoxylated urethane polymer.

Embodiment 36. The composition of any of embodiments 1-35, wherein the at least one colorant includes at least one near-infrared reflective colored pigment.

Embodiment 37. The composition of embodiment 36, wherein each of the at least one near-infrared reflective colored pigments is a mixed metal oxide.

Embodiment 38. The composition of embodiment 37, wherein at least one of the at least one near-infrared reflective colored pigments is an oxide of tin, titanium and zinc.

Embodiment 40. The composition of any of embodiments 36-38, wherein the at least one near-infrared reflective colored pigment has a total solar reflectivity of at least 30%, e.g., at least 50%..

Embodiment 41. The composition of any of embodiments 1-40, wherein the one or more colorants includes one or more inorganic pigments.

Embodiment 42. The composition of any of embodiments 1-41, wherein the one or more colorants includes one or more organic pigments or dyes.

Embodiment 43. The composition of any of embodiments 1-42, wherein one or more of the one or more colorants has an L* value of no more than 45, e.g., no more than 40, or no more than 30, or no more than 28.

Embodiment 44. The composition of any of embodiments 1-43, wherein one or more of the one or more of the one or more colorants has a L* value in the range of 10-50, or 10-45, or 10-40, or 10-30, or 10-28.

Embodiment 45. The composition of any of embodiments 1-43, wherein one or more of the one or more colorants has a L* value in the range of 15-50, or 15-45, or 15-40, or 15-30, or 15-28.

Embodiment 46. The composition of any of embodiments 1-43, wherein one or more of the one or more colorants has a L* value in the range of 20-50, or 20-45, or 20-40, or 15-30, or 20-28.

Embodiment 47. The composition of any of embodiments 1-46, wherein one or more of the one or more colorants has a value of (a²+b²)^{1/2} of less than 30, or less than 20, or less than 10, e.g., 5-30, or 5-20, or 5-10, or 10-30, or 10-20.

Embodiment 48. The composition of any of embodiments 1-46, wherein one or more of the one or more colorants has a value of the (a²+b²)^{1/2} of at least 30, e.g., at least 45, or at least 60, e.g., 30-95, or 45-95, or 60-95, or 30-80, or 45-80, or 60-80.

Embodiment 49. The composition of any of embodiments 1-48, wherein the at least one colorant is present in an amount in the range of 0.1-15 wt%, e.g., 0.1-10 wt%, or 0.1-5 wt%, based on the total weight of the composition.

Embodiment 50. The composition of any of embodiments 1-48, wherein the at least one colorant is present in an amount in the range of 0.2-20 wt%, e.g., 0.2-15 wt%, or 0.2-10 wt%, or 0.2-5 wt%, based on the total weight of the composition.

Embodiment 51. The composition of any of embodiments 1-48, wherein the at least one colorant is present in an amount in the range of 0.5-20 wt%, e.g., 0.5-15 wt%, or 0.5-10 wt%, or 0.5-5 wt%, based on the total weight of the composition.

Embodiment 52. The composition of any of embodiments 1-48, wherein the at least one colorant is present in an amount in the range of 1-20 wt%, e.g., 1-15 wt%, or 1-10 wt%, or 1-5 wt%, based on the total weight of the composition.

Embodiment 53. The composition of any of embodiments 1-48, wherein the at least one colorant is present in an amount in the range of 2-20 wt%, e.g., 2-15 wt%, or 2-10 wt%, based on the total weight of the composition.

Embodiment 54. The composition of any of embodiments 1-48, wherein the at least one colorant is present in an amount in the range of 3-20 wt%, e.g., 3-15 wt%, or 3-10 wt%, based on the total weight of the composition.

Embodiment 55. The composition of any of embodiments 1-54, wherein the at least one colorant is present in an amount in the range of 0.2-30 wt%, or 0.2-20 wt%, or 0.2-10 wt% on a dry solids basis.

Embodiment 56. The composition of any of embodiments 1-54, wherein the at least one colorant is present in an amount in the range of 0.4-40 wt%, e.g., 0.4-30 wt%, or 0.4-20 wt%, or 0.4-10 wt%, on a dry solids basis.

Embodiment 57. The composition of any of embodiments 1-54, wherein the at least one colorant is present in an amount in the range of 1-40 wt%, e.g., 1-30 wt%, or 1-20 wt%, or 1-10 wt%, on a dry solids basis.

Embodiment 58. The composition of any of embodiments 1-54, wherein the at least one colorant is present in an amount in the range of 2-40 wt%, e.g., 2-30 wt%, or 2-20 wt%, or 2-10 wt%, on a dry solids basis.

Embodiment 59. The composition of any of embodiments 1-54, wherein the at least one colorant is present in an amount in the range of 4-40 wt%, e.g., 4-30 wt%, or 4-20 wt%, or 4-10 wt%, on a dry solids basis.

Embodiment 60. The composition of any of embodiments 1-54, wherein the at least one colorant is present in an amount in the range of 6-40 wt%, e.g., 6-30 wt%, or 6-20 wt%, or 6-10 wt%, on a dry solids basis.

Embodiment 61. The composition of any of embodiments 1-60, wherein the coating composition further comprises a hydrophobic acrylic polymer present in an amount in the range of 2 wt% to 40 wt%.

Embodiment 62. The composition of any of embodiments 1-60, wherein the coating composition comprises a hydrophobic acrylic polymer present in an amount in the range of 20 wt% to 80 wt% on a dry solids basis.

Embodiment 63. The composition of embodiment 61 or embodiment 62, wherein the hydrophobic acrylic polymer, when provided as a dry film at standard laboratory conditions, has a water contact angle of at least 65 degrees, e.g., at least 70 degrees, or at least 75 degrees, for example, in the range of 65-95 degrees, or 70-95 degrees, or 75-95 degrees.

Embodiment 64. The composition of any of embodiments 61-63, wherein the hydrophobic acrylic polymer is provided as a self-crosslinking dispersion that alone can form a film that is flexible at room temperature, for example, with a minimum film forming temperature in the range of 0-20 °C.

Embodiment 65. The composition of any of embodiments 61-64, wherein the hydrophobic acrylic polymer has a glass transition temperature of no more than 35 °C, e.g., no more than 30 °C, for example, in the range of 5-35 °C, or 5-30 °C, or 10-35 °C, or 10-30 °C.

Embodiment 66. The composition of any of embodiments 61-65, wherein the hydrophobic acrylic polymer is present in an amount in the range of 10-30 wt%, or 15-30 wt%, or 20-30 wt%, or 5-25 wt%, or 5-20 wt%, or 5-15 wt%, or 10-30 wt%, or 10-25 wt%, or 10-20 wt%, or 15-30 wt%, or 15-25 wt%, or 20-30 wt% based on the total weight of the composition.

Embodiment 67. The composition of any of embodiments 61-66, wherein the hydrophobic acrylic polymer is present in an amount in the range of 20-70 wt%, or 20-60 wt%, or 20-50 wt%, or 20-40 wt%, or 20-30 wt%, or 30-80 wt%, or 30-70 wt%, or 30-60 wt%, or 30-50 wt%, or 30-40 wt%, or 40-80 wt%, or 40-70 wt%, or 40-60 wt%, or 40-50 wt%, or 50-80 wt%, or 50-70 wt%, or 50-60 wt%, on a dry solids basis.

Embodiment 68. The composition of any of embodiments 61-67, wherein the hydrophobic acrylic polymer is provided as an emulsion or dispersion in an amount in the range of 10 wt% to 60 wt% of the total weight of the composition (e.g., 10-50 wt%, or 10-40 wt%, or 10-30 wt%, or 10-20 wt%, or 20-60 wt%, or 20-50 wt%, or 20-40 wt%, or 20-30 wt%, or 30-60 wt%, or 30-50 wt%, or 30-40 wt%, or 40-60 wt%, or 40-50 wt%, or 50-60 wt%) based on the total weight of the composition.

Embodiment 69. The composition of any of embodiment 6680, wherein the emulsion or dispersion of the hydrophobic acrylic polymer has a viscosity in the range of 1000 to 3000 mPa·s (e.g., in the range of 1000-2500 mPa s, or 1000-2000 mPa s, or 1500-3000 mPa s, or 1500-2500 mPa s, or 2000-000 mPa s).

Embodiment 70. The composition of any of embodiments 68-69, wherein the emulsion or dispersion of the hydrophobic acrylic polymer has a pH in the range of 5 to 8, e.g., in the range of 7 to 8.

Embodiment 71. The composition of any of embodiments 1-70, wherein the composition further comprises reflective particles (e.g., titanium oxide), present in an amount in the range of 1 wt% to 15 wt% based on the total weight of the composition, or in the range of 2-30 wt% on a dry solids basis.

Embodiment 72. The composition of embodiment 71, wherein the reflective particles are present in an amount in the range of 1-12 wt%, or 1-10 wt%, or 1-8 wt%, or 1-5 wt%, or 2-15 wt%, or 2-12 wt%, or 2-10 wt%, or 2-8 wt%, or 2-5 wt%, or 5-15 wt%, or 5-12 wt%, or 5-10 wt%, or 7-15 wt%, or 7-12 wt%, or 10-15 wt%, based on the total weight of the composition.

Embodiment 73. The composition of embodiment 71 or embodiment 72, wherein the reflective particles are present in an amount in the range of 2-25 wt%, or 2-20 wt%, or 2-15 wt%, or 2-10 wt%, or 5-30 wt%, or 5-25 wt%, or 5-20 wt%, or 5-15 wt%, or 5-10 wt%, or 10-30 wt%, or 10-25 wt%, or 10-20 wt%, or 15-30 wt%, or 15-25 wt%, or 20-30 wt%, on a dry solids basis.

Embodiment 74. The composition of any of embodiments 71-73, wherein the reflective particles are independently selected from the group consisting of titanium dioxide, aluminum oxide, iron oxide, zinc oxide, and combinations thereof.

Embodiment 75. The composition of any of embodiments 71-73, wherein the reflective particles are titanium dioxide particles.

Embodiment 76. The composition of any of embodiments 1-75, wherein the coating further comprises a mineral filler.

Embodiment 77. The composition of embodiment 76, wherein the mineral filler is present in an amount in the range of 0.5-30 wt% (e.g. in the range of 0.5-20 wt%, or 0.5-15 wt%, or 0.5-10 wt%, or 2-30 wt%, or 2-20 wt%, or 2-15 wt%, or 2-10 wt%, or 5-30 wt%, or 5-20 wt%, or 5-15 wt%, or 10-30 wt%, or 10-20 wt%, or 15-30 wt%), based on the total weight of the composition.

Embodiment 78. The composition of embodiment 76 or embodiment 77, wherein the mineral filler is present in an amount in the range of 1-60 wt% (e.g. in the range of 1-40 wt%, or 1-30 wt%, or 1-20 wt%, or 5-60 wt%, or 5-40 wt%, or 5-30 wt%, or 5-20 wt%, or 10-60 wt%, or 10-40 wt%, or 10-30 wt%, or 20-60 wt%, or 20-40 wt%, or 30-60 wt%) on a dry solids basis.

Embodiment 79. The composition of any of embodiments 76-78, wherein the mineral filler is one or more selected from the group consisting of calcium carbonate, barium sulfate, clay, talcum, dolomite, mica, sand, silica, aluminum oxide, crushed basalt, kaolin, and calcined kaolin.

Embodiment 80. The composition of embodiment any of embodiments 76-79, where in the filler is calcium carbonate.

Embodiment 81. The composition of any of embodiments 1-80, further comprising a dispersant (e.g. a surfactant, and preferably a non-ionic surfactant).

Embodiment 82. The composition of embodiment 81, wherein the dispersant is present in an amount up to 5 wt%, e.g., up to 2 wt%, or up to 1 wt%, or 0.05-5 wt%, or 0.05-2 wt%, or 0.05-1 wt%, or 0.05-0.5 wt%, or 0.1-5 wt%, or 0.1-2 wt%, or 0.1-1 wt%, or 0.1-0.5 wt%, based on the dry weight of the composition.

Embodiment 83. The composition of any of embodiments 1-82, further comprising a thickening agent (e.g. a water soluble organic polymer such as cellulose derivatives, salts of poly(acrylic acid) and copolymers thereof, xanthan, and poly(vinyl alcohol)).

Embodiment 84. The composition of embodiment 83, wherein the thickening agent is present in an amount of 0.1-2 wt% (e.g., in the range of 0.1-1.5 wt%, or 0.1-1.0 wt%, or 0.5-2 wt%, or 0.5-1.5 wt%, or 0.5-1 wt%), based on the dry weight of the composition.

Embodiment 85. The composition of any of embodiments 1-84, further comprising a coalescing agent (e.g., propylene glycol phenyl ether (PPh), ethylene glycol, Texanol, modified urea).

Embodiment 86. The composition of embodiment 85, wherein the coalescing agent is present in an amount of 1-15 wt% (e.g. in the range of 1-10 wt%, or 1-7 wt%, or 1-5 wt%, or 2-15 wt%, or 2-10 wt%, or 2-7 wt%, or 5-15 wt%, or 5-10 wt%, or 10-15 wt%), based on the dry weight of the composition.

Embodiment 87. The composition of any of embodiments 1-86, wherein the aqueous coating composition includes 25-95 wt% water (e.g., 25-75 wt%, e.g., 25-60 wt% or 25-50 wt%).

Embodiment 88. The composition of any of embodiments 1-86, wherein the aqueous coating composition includes 30-95 wt% water (e.g., 30-75 wt%, or 30-60 wt%, or 30-50 wt%), based on the total weight of the composition.

Embodiment 89. The composition of any of embodiments 1-86, wherein the aqueous coating composition includes 35-95 wt% water (e.g., 35-75 wt%, or 35-60 wt%, or 35-50 wt%), based on the total weight of the composition.

Embodiment 90. The composition of any of embodiments 1-86, wherein the aqueous coating composition includes 40-95 wt% water (e.g., 40-75 wt%, or 40-65 wt%, or 40-55 wt%), based on the total weight of the composition.

Embodiment 91. The composition of any of embodiments 1-90, wherein the coating composition has a Brookfield viscosity (spindle 5) at 23 °C of at least 30,000 cP at 0.3 rpm; and no more than 3000 cP at 100 rpm.

Embodiment 92. The composition of any of embodiments 1-90, wherein the coating composition has a Brookfield viscosity (spindle 5) at 23 °C of at least 40,000 cP at 0.3 rpm; and no more than 2000 cP at 100 rpm.

Embodiment 93. The composition of any of embodiments 1-92, wherein the coating composition has a Brookfield viscosity (spindle 5) at 23 °C and 0.3 rpm that is at least 2.5 times, e.g., at least 5 times a Brookfield viscosity (spindle 5) at 23 °C and 100 rpm of the coating composition.

Embodiment 94. The composition of any of embodiments 1-92, wherein the coating composition has a Brookfield viscosity (spindle 5) at 23 °C and 0.3 rpm that is at least 10 times, e.g., at least 20 times a Brookfield viscosity (spindle 5) at 23 °C and 100 rpm of the coating composition.

Embodiment 95. The composition of any of embodiments 1-94, wherein the coating composition has a pH of at least 9.0, e.g., at least 9.3, or at least 9.5.

Embodiment 96. The composition of any of embodiments 1-94, wherein the composition has a pH in the range of 9.0-12.0, e.g., 9.0-11.5, or 9.0-11.0, or 9.0-10.5, or 9.0-10.0.

Embodiment 97. The composition of any of embodiments 1-94, wherein the composition has a pH in the range of 9.3-12.0, e.g., 9.3-11.5, or 9.3-11.0, or 9.3-10.5, or 9.3-10.0.

Embodiment 98. The composition of any of embodiments 1-94, wherein the composition has a pH in the range of 9.5-12.0, e.g., 9.5-11.5, or 9.5-11.0, or 9.5-10.5, or 9.5-10.0.

Embodiment 99. The composition of any of embodiments 1-98, having, when formed into a 250 micron thick dry coating, a L* value of on the CIELAB color space of no more than 60, e.g., no more than 55.

Embodiment 100. The composition of any of embodiments 1-98, having, when formed into a 250 micron thick dry coating, a L* value of on the CIELAB color space of no more than 50, e.g., no more than 45.

Embodiment 101. The composition of any of embodiments 1-98, having, when formed into a 250 micron thick dry coating, a L* value of on the CIELAB color space of no more than 40, e.g., no more than 35.

Embodiment 102. The composition of any of embodiments 1-98, having, when formed into a 250 micron thick dry coating, a L* value of on the CIELAB color space of no more than 30, e.g., no more than 25.

Embodiment 103. The composition of any of embodiments 1-102, having, when formed into a 250 micron thick dry coating, a value of (a²+b²)^{1/2} of at least 2, e.g., at least 3.

Embodiment 104. The composition of any of embodiments 1-102, having, when formed into a 250 micron thick dry coating, a value of (a²+b²)^{1/2} of at least 5, e.g., at least 7.

Embodiment 105. The composition of any of embodiments 1-102, having, when formed into a 250 micron thick dry coating, a value of (a²+b²)^{1/2} of at least 10, e.g., at least 15.

Embodiment 106. The composition of any of embodiments 1-102, having, when formed into a 250 micron thick dry coating, a value of (a²+b²)^{1/2} of at least 20, e.g., at least 25.

Embodiment 107. The composition of any of embodiments 1-106, having, when formed into a 250 micron thick dry coating, a solar reflectance (SR) of at least 25% (e.g., at least 30%, or at least 35%, or at least 40%)

Embodiment 108. The composition of any of embodiments 1-106, having, when formed into a 250 micron thick dry coating, a solar reflectance (SR) in the range of 25-80%, e.g., in the range of 30-80%, or 35-80%, or 40-80%, or 25-75%, or 30-75%, or 35-75%, or 40-75%.

Embodiment 109. The composition of any of embodiments 1-106, having, when formed into a 250 micron thick dry coating, a thermal emittance (TE) of at least 70% (e.g., at least 80%, or at least 90%).

Embodiment 110. The composition of any of embodiments 1-106, having, when formed into a 250 micron thick dry coating, a thermal emittance (TE) in the range of 70-100% (e.g., in the range of 70-95%, or 70-95%, or 80-100%, or 80-95%, or 90-100%, or 90-95%).

Embodiment 111. The composition of any of embodiments 1-110, having, when formed into a 250 micron thick dry coating, a solar reflectance index of at least 60 (e.g., of at least 70, or at least 80, or at least 90, or at least 100).

Embodiment 112. The composition of any of embodiments 1-110, having, when formed into a 250 micron thick dry coating, a solar reflectance index in the range of 60-120, e.g., in the range of 70-120, or 80-120, or 90-120, or 100-120, or 60-110, or 70-110, or 80-110, or 90-110, or 60-100, or 70-100, or 80-100, or 60-90, or 70-90, or 60-80.

Embodiment 113. A coated surface comprising a substrate having a layer of the coating composition of any of embodiments 1-112 disposed thereon.

Embodiment 114. The coated surface according to embodiment 113, wherein the layer of the coating composition has a thickness in the range of 25 to 1000 µm (e.g. in the range of 25 to 800 µm, or 25 to 500 µm, or 50 to 1000 µm, or 50 to 800 µm, or 50 to 500 µm, or 75 to 1000 µm, or 75 to 800 µm, or 75 to 500 µm).

Embodiment 115. A coating that is a coated dried product of the coating composition of any of embodiments 1-112.

Embodiment 116. A coating (e.g., according to Embodiment 115) that comprises
a functionalized anionic polyurethane present in an amount in the range of 20-80 wt% of the composition on a dry solids basis;
a water-insoluble transition metal crosslinking agent present in an amount in the range of 0.5-30 wt% of the composition on a dry solids basis; and
a pseudoplastic thickener in an amount in the range of 0.1 wt% to 20 wt% on a dry solids basis; and
at least colorant present in an amount in the range of 0.2 wt% to 20 wt% on a dry solids basis.

Embodiment 117. The coating of embodiment 115 or embodiment 116, comprising components and amounts thereof as described in any one or more of embodiments 1-112.

Embodiment 118. The coating of any of embodiments 115-117, having a dry coverage rate in the range of 100-2000 g/m², e.g., in the range of 200-2000 g/m², or 400-2000 g/m², or 600-2000 g/m², or 100-1000 g/m², or 200-1000 g/m², or 400-1000 g/m², or 100-500 g/m², or 200-500 g/m².

Embodiment 119. The coating of any of embodiments 115-117, having a dry coverage rate of less than 350 g/m².

Embodiment 120. The coating of any of embodiments 115-117, having a dry coverage rate in the range of 100-350 g/m² (e.g., in the range of 150-350 g/m², or 200-350 g/m², or 100-300 g/m², or 150-300 g/m², or 200-300 g/m²).

Embodiment 121. The coating of any of embodiments 115-120, having a thickness in the range of 25 to 2000 µm, e.g., 50-2000 µm, or 100-2000 µm, or 250-2000 µm, or 500- 2000 µm, or 1000-2000 µm, or 25-1000 µm, or 50-1000 µm, or 100-2000 µm, or 250-2000 µm, or 500-1000 µm, or 25 to 300 µm, or 25 to 200 µm, or 25 to 100 µm, or 50 to 300 µm, or 50 to 200 µm, or 50 to 100 µm, or 75 to 300 µm, or 75 to 200 µm, or 75 to 150 µm.

Embodiment 122. The coating of any of embodiments 115-121, having properties as described in any of embodiments 87-108.

Embodiment 123. A roofing material comprising:
a roofing product; and
a coating according to any of embodiments 115-122 disposed on top of the roofing product.

Embodiment 124. The roofing material of embodiment 123, having properties as described in any of embodiments 95-108.

Embodiment 125. The roofing material of embodiment 123 or 125, wherein the roofing product is a roofing membrane.

Embodiment 126. The roofing material of embodiment 123 or 125, wherein the roofing product is a bituminous membrane, e.g., having a bituminous substrate having a top surface and roofing granules adhered to the top surface of the bituminous substrate.

Embodiment 127. The roofing material of embodiment 123 or 124, wherein the roofing product is a thermoplastic membrane.

Embodiment 128. The roofing material of any of embodiments 123-127, wherein the roofing product has a solar reflectance no more than 60, e.g., no more than 50, or no more than 40.

Embodiment 129. The roofing material of any of embodiments 123-127, wherein the roofing product has a solar reflectance no more than 30, e.g., no more than 25, or no more than 20, or no more than 15.

Embodiment 130. The roofing material of any of embodiments 123-127, wherein the roofing product comprises a bituminous substrate and roofing granules adhered to a top surface of the bituminous substrate, and wherein the roofing granules have a solar reflectance no more than 60, e.g., no more than 50, or no more than 40, or no more than 30, or no more than 25, or no more than 20, or no more than 15.

Embodiment 131. The roofing material of embodiment 130, wherein the roofing granules have a value of (a²+b²)^{1/2} on the CIELAB color space of no more than 30 in absolute value, e.g., no more than 20 in absolute value, or no more than 10 in absolute value.

Embodiment 132. A roof, comprising a roof deck and a roofing material according to any of embodiments 119-127 disposed thereon.

Embodiment 133. A method of making a roof according to embodiment 132, comprising providing a roof deck having disposed thereon the roofing product; and coating and drying on the roofing product a coating composition according to any of embodiments 1-108.

Embodiment 134. The roofing material of any of embodiments 123 or 124, wherein the roofing product is a roofing shingle.

Embodiment 135. The roofing material of embodiment 134, wherein the roofing product is a bituminous shingle, e.g., having a bituminous substrate having a top surface and roofing granules adhered to the top surface of the bituminous substrate.

Embodiment 136. The roofing material of embodiment 134 or embodiment 135, wherein the roofing product has a solar reflectance no more than 60, e.g., no more than 50, or no more than 40.

Embodiment 137. The roofing material of embodiment 134 or embodiment 135, wherein the roofing product has a solar reflectance no more than 30, e.g., no more than 25, or no more than 20, or no more than 15.

Embodiment 138. The roofing material of any of embodiments 134-137, wherein the roofing product comprises a bituminous substrate and roofing granules adhered to a top surface of the bituminous substrate, and wherein the roofing granules have a solar reflectance no more than 60, e.g., no more than 50, or no more than 40, or no more than 30, or no more than 25, or no more than 20, or no more than 15.

Embodiment 139. The roofing material of embodiment 138, wherein the roofing granules have value of (a²+b²)^{1/2} on the CIELAB color space of no more than 30 in absolute value, e.g., no more than 20 in absolute value, or no more than 10 in absolute value.

Embodiment 140. A roof, comprising a roof deck and a roofing material according to any of embodiments 134-139 disposed thereon in the form of an array of overlapping roofing shingles.

Embodiment 141. A method of making a roof according to embodiment 140, comprising providing a roof deck having disposed thereon the roofing product; and coating and drying on the roofing product a coating composition according to any of embodiments 1-112.

Embodiment 142. A surface comprising a substrate (e.g., a building surface); and a coating according to any of embodiments 115-122 disposed on the substrate (e.g., the building surface).

Embodiment 143. The surface according to embodiment 142, wherein the surface is concrete, stucco, mortar, brick, wood, plastic such as PVC, metal such as steel, or fiberglass composite.

Embodiment 144. A collection of roofing granules, each comprising a base particle, and a coating according to any of embodiments 115-122 coating the base particle.

Embodiment 145. A collection of roofing granules according to claim 144, wherein each base roofing granule is a mineral particle.

Embodiment 146. A method for making the collection of roofing granules of embodiment 144 or embodiment 145, comprising coating the coating on the base roofing granules via fluidized bed coating of an aqueous coating composition of any of embodiments 1-108.

Embodiment 147. The method according to embodiment 146, wherein the coating is performed using fluidized bed coating.

## Claims

1. An aqueous coating composition comprising water, and, dispersed in the water,
a functionalized anionic polyurethane present in an amount in the range of 20-80 wt% of the composition on a dry solids basis;
a water-insoluble transition metal crosslinking agent present in an amount in the range of 0.5-30 wt% of the composition on a dry solids basis;
a pseudoplastic thickener in an amount in the range of 0.02 wt% to 4 wt% on a dry solids basis; and
at least one colorant present in an amount in the range of 0.2 wt% to 40 wt% on a dry solids basis.

2. An aqueous coating composition comprising:
a functionalized anionic polyurethane present in an amount in the range of 2-40 wt% of the composition;
a water-insoluble transition metal crosslinking agent present in an amount in the range of 0.2-15 wt% of the composition;
water;
a pseudoplastic thickener in an amount in the range of 0.01 wt% to 2 wt% of the composition; and
at least one colorant present in an amount in the range of 0.1 wt% to 20 wt% of the composition.

3. The composition of claim 1 or claim 2, wherein the functionalized anionic polyurethane comprises both free pendant carboxylate groups of formula -COO⁻ M⁺ where M⁺ is a cation resulting from neutralization of carboxylic acid groups with a base, and pendant carboxylate ester groups resulting from esterification of free carboxylic acid groups with an epoxysilane, such as (3-glycidyloxypropyl)trialkoxysilane.

4. The composition of any of claims 1-3, wherein the functionalized anionic polyurethane is the reaction product of a polyisocyanate component and a polyol component, wherein the polyol component includes one or more polyhydroxy carboxylic acids (such as dimethylol propionic acid).

5. The composition of any of claims 1-4, wherein the water-insoluble transition metal crosslinking agent is zinc oxide.

6. The composition of any of claims 1-5, wherein the pseudoplastic thickener is present in an amount in the range of 0.2-4 wt%, e.g., 0.2-2 wt%, or 0.2-1 wt%, or 0.2-0.5 wt%, on a dry solids basis.

7. The composition of any of claims 1-6, wherein the coating composition has a Brookfield viscosity (spindle 5) at 23 °C and 0.3 rpm that is at least 10 times, e.g., at least 20 times a Brookfield viscosity (spindle 5) at 23 °C and 100 rpm of the coating composition.

8. The composition of any of claims 1-7, wherein the coating composition has a pH of at least 9.0, e.g., at least 9.3, or at least 9.5.

9. The composition of any of claims 1-8, having, when formed into a 250 micron thick dry coating, a L* value of on the CIELAB color space of no more than 60, e.g., no more than 55.

10. A coated surface comprising a substrate having a layer of the coating composition of any of claims 1-9 disposed thereon.

11. A coating that is a coated dried product of the coating composition of any of claims 1-9.

12. A roofing material comprising:
a roofing product; and
a coating according to claim 11 disposed on top of the roofing product.

13. A method of making a roof comprising a roof deck and a roofing material according to claim 12 disposed thereon, the method comprising providing a roof deck having disposed thereon the roofing product; and coating and drying on the roofing product a coating composition according to any of claims 1-9.

14. A collection of roofing granules, each comprising a base particle, and a coating according claim 11 coating the base particle.

15. A method for making the collection of roofing granules of claim 14, comprising coating the coating on the base roofing granules via fluidized bed coating of an aqueous coating composition of any of claims 1-9.
